(19) Europäisches Patentamt
European Patent Office
Office européen des brevets

(11) **EP 4 366 254 A1**

(12) **EUROPEAN PATENT APPLICATION**

(43) Date of publication:
**08.05.2024 Bulletin 2024/19**

(21) Application number: **23208192.7**

(22) Date of filing: **07.11.2023**

(51) International Patent Classification (IPC):
**H04L 25/02** (2006.01)      **H04L 25/03** (2006.01)
**H04L 27/26** (2006.01)

(52) Cooperative Patent Classification (CPC):
**H04L 25/0236; H04L 25/03292; H04L 27/0014;**
**H04L 27/2657; H04L 27/2676;** H04L 25/03159;
H04L 27/2679

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.11.2022 US 202263423291 P**
**08.06.2023 US 202318207427**

(71) Applicant: **Samsung Electronics Co., Ltd.**
**Suwon-si, Gyeonggi-do 16677 (KR)**

(72) Inventor: **HE, Ziming**
**Cambridge, CB4 0DS (GB)**

(74) Representative: **Marks & Clerk LLP**
**15 Fetter Lane**
**London EC4A 1BW (GB)**

(54) **INTERFERENCE-AWARE DECISION DIRECTED FREQUENCY AND PHASE TRACKING FOR COHERENT DEMODULATION IN NARROWBAND WIRELESS COMMUNICATION SYSTEMS**

(57)     A communication device, including a receiver configured to receive a signal from a transmitter, the signal including a plurality of data symbols; and at least one processor configured to: obtain a channel estimate and an estimated carrier frequency offset based on a result of an interference detection indicating whether interference is detected in the plurality of data symbols, obtain a data symbol of the plurality of data symbols, obtain a compensated data symbol corresponding to the data symbol based on the estimated carrier frequency offset, obtain an equalized compensated data symbol by performing channel equalization on the compensated data symbol based on the channel estimate, and demodulate and decode the equalized compensated data symbol to obtain decoded data.

FIG. 11A

**Description**

BACKGROUND

1. Field

Apparatuses and methods consistent with embodiments relate to wireless communication, and more particularly to carrier frequency offset (CFO) estimation and channel estimation.

2. Description of Related Art

Carrier frequency offset (CFO) estimation and channel estimation are important functions in wireless communication receivers to achieve high throughput. CFO estimation and channel estimation may be performed based on training symbols, which may be for example preamble symbols.

However, some narrowband receivers may operate based on coherent demodulation, which may require CFO tracking and channel phase tracking simultaneously in the payload duration. For example, due to short preamble design, the initial CFO estimation may have limited performance, which may make the CFO and phase tracking more important.

CFO estimation and channel estimation may be performed by inserting pilots or training fields in the payload. However, in order to maximize throughput, it may be desirable to perform CFO estimation and channel estimation based on a payload which does not include pilots or training fields.

In addition, interference can break the CFO tracking or phase tracking continuity and cause error propagation in the rest of the payload, especially if no pilots or training fields are used to reset the tracking status.

Therefore, there exists a need for interference-aware CFO and phase tracking techniques which can operate based on payload data without pilots or training fields.

SUMMARY

Provided are devices and methods for performing interference-aware decision-directed CFO estimation and channel estimation, according to embodiments.

In accordance with an aspect of the disclosure, a communication device includes a receiver configured to receive a signal from a transmitter, the signal including a plurality of data symbols; and at least one processor configured to: obtain a channel estimate and an estimated carrier frequency offset based on a result of an interference detection indicating whether interference is detected in the plurality of data symbols, obtain a data symbol of the plurality of data symbols, obtain a compensated data symbol corresponding to the data symbol based on the estimated carrier frequency offset, obtain an equalized compensated data symbol by performing channel equalization on the compensated data symbol based on the channel estimate, and demodulate and decode the equalized compensated data symbol to obtain decoded data.

In accordance with an aspect of the disclosure, a device for estimating carrier frequency offset includes a memory configured to store a plurality of data symbols; and at least one processor configured to: obtain a channel estimate and an estimated carrier frequency offset based on a result of an interference detection indicating whether interference is detected in the plurality of data symbols, obtain a data symbol of the plurality of data symbols, obtain an equalized compensated data symbol corresponding to the data symbol based on the estimated carrier frequency offset and the channel estimate, and demodulate and decode the equalized compensated data symbol to obtain decoded data.

In accordance with an aspect of the disclosure, a communication method for operating a communication device, is performed by at least one processor and includes receiving, by a receiver from a transmitter, a plurality of data symbols; obtaining a channel estimate and an estimated carrier frequency offset based on a result of an interference detection indicating whether interference is detected in the plurality of data symbols; obtaining a data symbol from among the plurality of data symbols; obtaining a compensated data symbol corresponding to the data symbol based on the estimated carrier frequency offset; obtaining an equalized compensated data symbol by performing channel equalization on the compensated data symbol based on the channel estimate; and demodulating and decoding the equalized compensated data symbol to obtain decoded data.

In accordance with an aspect of the disclosure, a method for estimating carrier frequency offset is performed by at least one processor and includes receiving, by a receiver from a transmitter, a plurality of data symbols; obtaining a channel estimate and an estimated carrier frequency offset based on a result of an interference detection indicating whether interference is detected in the plurality of data symbols; obtaining a data symbol of the plurality of data symbols; obtaining an equalized compensated data symbol corresponding to the data symbol based on the estimated carrier frequency offset and the channel estimate; and demodulating and decoding the equalized compensated data symbol to obtain decoded data.

At least some of the above and other features of the invention are set out in the claims.

BRIEF DESCRIPTION OF THE DRAWINGS

FIG. 1 is a block diagram of a communication system, according to embodiments.

FIG. 2 is a block diagram of a packet used in wireless communication, according to embodiments.

FIG. 3 is a block diagram illustrating a process of selecting symbols to be used for performing carrier frequency offset estimation and channel estimation, according to embodiments.

FIGS. 4A-4B are block diagrams of illustrating an example of an estimation module, according to embodiments.

FIGS. 5A-5D are graphs illustrating examples of carrier frequency offset estimation performance, according to embodiments.

FIGS. 6A-6F, 7A-7F, and 8A-8F, 9A-9B, and 10 are graphs illustrating examples of CFO estimation and channel estimation performance, according to embodiments.

FIGS. 11A - 11C are diagrams illustrating processes for estimating carrier frequency offset, according to embodiments.

FIG. 12 is a block diagram of an electronic device, according to embodiments.

DETAILED DESCRIPTION

Embodiments relate to devices and methods for performing carrier frequency (CFO) estimation and channel estimation.

In particular, embodiments may relate to interference-aware decision-directed CFO and channel phase tracking techniques which may have excellent tracking performance in wireless environments with and without interference. Embodiments may be performed without requiring pilots or training fields to be embedded the packet payload, and may be suitable for narrowband receivers using coherent demodulation.

Embodiments may be applied in any communication device, system, or method in which CFO error or channel error is relevant to the communication throughput. For example, embodiments may be applied in any communication device, system, or method which uses a time domain modulation scheme.

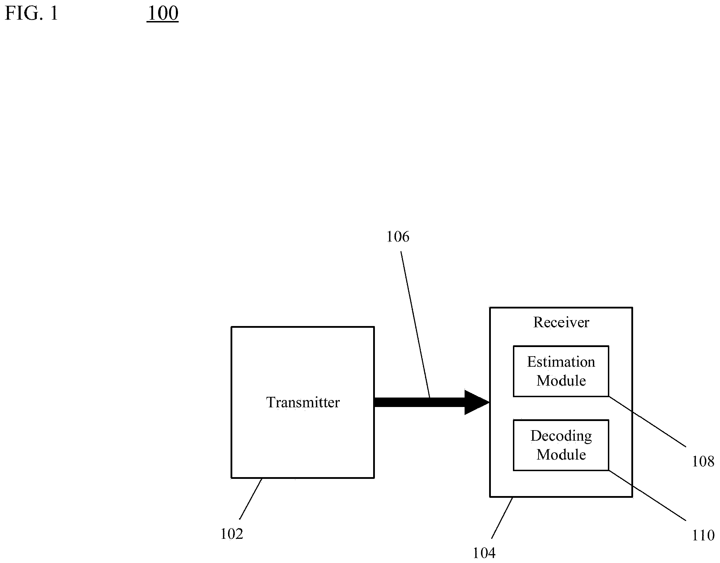

FIG. 1 is a block diagram of a communication system 100, according to embodiments. As shown in FIG. 1, a transmitter 102 and a receiver 104 may communicate using a communication channel 106. In embodiments, the communication channel 106 may be a wired or wireless communication channel. In embodiments, when a CFO is present between the transmitter 102 and the receiver 104, or when a channel response of the communication channel 106 is improperly estimated, there may be significant degradation in performance. For example, the undesirable degradation in performance may result in an inability to demodulate and decode signals received over the communication channel 106. Therefore, in embodiments, the receiver 104 may include an estimation module 108, which may be used to perform CFO estimation and channel estimation on signals received over the communication channel 106. In addition, the receiver 104 may include a decoding module 110, which may be used to decode received symbols, for example after the symbols are processed according to an estimated CFO and a channel estimate obtained using the estimation module 108.

Although the communication system 100 is illustrated as including the transmitter 102 and the receiver 104, embodiments are not limited thereto. For example, one or more of the transmitter 102 and the receiver 104 may be replaced with a transceiver capable of performing both transmitting and receiving of signals. In embodiments, the transceiver may include an estimation module 108 which may be used to perform CFO estimation and channel estimation when the transceiver operates in a receiving mode. In addition, in embodiments the communication system 100 may include multiple transmitters, receivers, and transceivers which may transmit and receive signals using the communication channel 106.

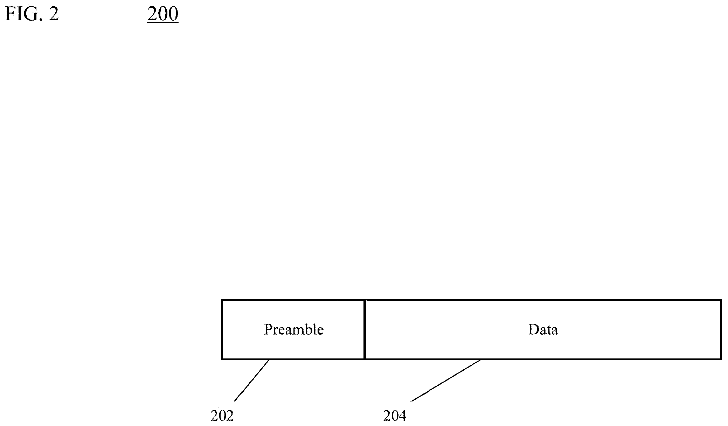

FIG. 2 is a block diagram of a packet 200 that may be used by the communication system 100. The packet 200 may include a preamble portion 202 and a data portion 204. Some estimation techniques may only involve performing initial CFO estimation and channel estimation using the preamble portion 202, and may not involve updating CFO estimation and channel estimation. As a result, these techniques may not have the ability of interference-awareness.

In contrast, embodiments may perform CFO, phase and interference tracking using the packet payload, which may be included for example in the data portion 204. Therefore, embodiments may be interference-aware, and may be performed based on unknown data symbols included in the data portion 204. For example, according to embodiments the estimation module 108 may obtain an estimated CFO and a channel estimate based on one or more data symbols from the data portion 204. Based on the estimated CFO and the channel estimate, the decoding module 110 may obtain a compensated version of the data portion 204, and then demodulate and decode the data portion to obtain decoded data corresponding to the received signal.

The packet structure of packet 200 may also be used in slow mobility scenarios, for example wireless local area network (WLAN). WLAN may be used by wideband orthogonal frequency-division multiplexing (OFDM) systems. In WLAN, an error in initial CFO estimation may have two impacts: introducing common phase error (CPE) in the frequency-domain, and causing inter-subcarrier interference (ICI). In wideband systems such as WLAN, the preamble portion 202 may offer an accurate estimate of the CFO in multi-carrier systems, and the ICI may be suppressed to a reasonably low level. The CPE may be relatively more important, because it may lead to phase rotation, which may increase as time elapses. In WLAN standards such as Wi-Fi, the CPE may be tracked by pilots inserted in the payload, for example the data portion 204. The performance of CPE estimation may be not affected by the initial CFO estimation error, because the CFO error only affects the true value of CPE. Therefore, it may be relatively less important to track and improve the CFO estimation in the payload duration in Wi-Fi systems, especially when the CFO does not change too much in low mobility scenarios. For other WLAN systems, the CPE can be treated as part of the wireless channel, and can be tracked together with the aid of training fields in the payload, which may be referred to as the midamble. Accordingly, CFO tracking in the payload duration may not be considered in these other WLAN systems.

However, this may not be the case for narrowband systems. For example, unlike WLANs, ICI may not be present in narrowband systems. However, narrowband systems may still experience phase rotation which may be introduced by CFO estimation errors, which may also affect the phase estimation performance.

Accordingly, narrowband receiver design may present many challenges. For example, some narrowband receivers may operate based on coherent demodulation, which may require simultaneous CFO and channel phase tracking in the payload duration. In addition, some narrowband systems may use relatively short preambles, which may limit the performance of initial CFO estimation, and may therefore increase the importance of CFO and phase tracking. In addition, some narrowband receivers may use relatively long data portions 204, and therefore may need to minimize the impact from interference appearing in the long payload period. For example, in environments in which wideband systems and narrowband systems coexist, the wideband systems may cause interference in the narrowband systems.

As discussed above, embodiments may relate to a narrowband wireless communication system with packet structure of the packet 200, in which the data portion 204 does not contain any pilot or training fields. After timing synchronization and multipath channel equalization, an n-th received payload symbol $r_n$ may be modeled as signal corrupted by additive white Gaussian noise (AWGN), as shown for example in Equation 1 below:

$$r_n = h_0 s_n e^{j\omega(n-1)} + \xi_n, \ n = 1, \dots, N \qquad \text{Equation 1}$$

In Equation 1, $h_0$ may denote the flat channel at the starting point of the packet payload, $\omega$ may denote the true CFO, $\xi_n$ may denote the noise (and interference), and $s_n$ may denote the transmitted symbols. Using the preamble portion 202, a channel estimate $\hat{h}_0$ and an initial CFO estimate $\hat{\omega}_0$ may be obtained at the starting point of the payload, for example the starting point of the data portion 204. In embodiments, the decoding module may be used to estimate the transmitted symbol $s_n$ based on the received symbol $r_n$, and the performance may be affected by the estimation performance of both channel and CFO.

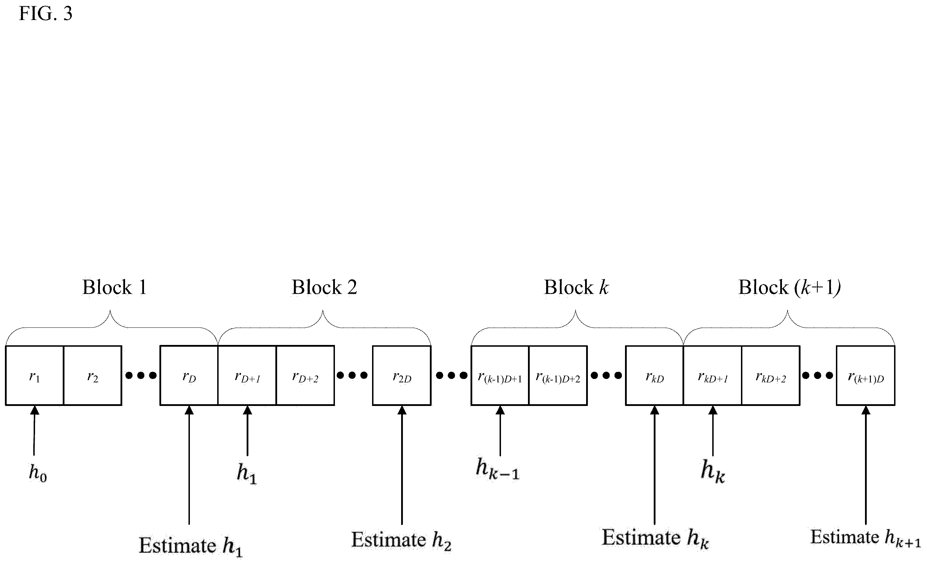

FIG. 3 shows an example of a relationship between a CFO/phase update block index $k$, which may be referred to as an update index, a symbol index $n$, and estimation update timing, according to embodiments. In embodiments, the receiver 104 may process the symbols $r_n$ in a symbol-by-symbol manner. As shown in Fig. 3, $N$ received symbols $r_n$ may be divided into a number of CFO/phase update blocks which have block indices $k \in [1, K]$, each of which contains $D$ symbols. As shown in FIG. 3, the CFO/phase update blocks may be illustrated as Block 1, Block 2, Block $k$, and Block $(k + 1)$.

A channel estimate $\hat{h}$ may be used for channel equalization and a CFO estimate $\hat{\omega}$ may be used for CFO removal for all of the symbols $r_n$ in a block. The channel estimate $\hat{h}$ may be initialized as $\hat{h} = \hat{h}_0$, and the CFO estimate $\hat{\omega}$ may be initialized as $\hat{\omega} = \omega_0$. The $k$th update of $\hat{h}$ and $\hat{\omega}$ may be performed at the $k$Dth symbol with the aid of the symbols in Block $k$, and the symbols in the Block $(k + 1)$ may use the updated estimates for CFO removal and channel equalization. The $k$th update of $\hat{h}$ may be used to estimate the true flat channel according to Equation 2 below:

$$h_k = h_{k-1} e^{j\omega D} \qquad (\text{Equation 2})$$

Therefore, the channel tracking problem may be equivalent to a phase tracking problem, and flat channel equalization may be used to remove phase rotation due to CFO. Examples of such channel equalization according to embodiments are provided below. In embodiments, the above modeling can be extended to time-variant CFO due to clock drift and/or Doppler. This does not affect the design of embodiments, and the above modeling is an example to explain various embodiments.

In general, estimation may be performed according to a number of different techniques. For example, some estimation techniques are described in J. Ran, R. Grünheid, H. Rohling, Edgar Bolinth, Ralf Kern "Decision-directed Channel Estimation Method for OFDM systems with high velocities," IEEE 58th Vehicular Technology Conference (VTC), 2003, and EP1389861A1 of Bolinth, the contents of which are incorporated herein by reference in their entireties. Ran and Bolinth use a 1st order technique to solve the channel tracking problem in wideband multi-carrier systems with pilots/training fields.

As discussed above, embodiments may relate to narrowband system without pilots/training fields, and as a result the techniques of Ran and Bolinth cannot be directly applied. However, the techniques of Ran and Bolinth may be modified in order to be applied to narrowband systems without pilots/training fields. These modified techniques may be referred to as Comparative Example 1.

According to Comparative Example 1, the 1st-order filtering in Ran and Bolinth may be used to estimate the channel at the *k*-th update, according to Equation 3 below:

$$\hat{h} = (1 - \mu_c)\hat{h}_{old} + \mu_c \hat{h}_{cur} \quad \text{(Equation 3)}$$

In Equation 3, $\hat{h}_{old} = \hat{h}e^{j\hat{\omega}D}$ may denote the old estimate, $\hat{h}_{cur}$ may denote the current decision directed estimate using symbols from Block *k,* and $\mu_c$ may denote the channel forgetting factor. All of the symbols in Block *k* may be used to obtain the decision directed channel estimate $\hat{h}_{cur}$, and $\mu_c$ may be computed according to Equation 4 below:

$$\mu_c = \mu_{max} \left( \frac{p_{mean} - \frac{1}{C}}{1 - \frac{1}{C}} \right)^{\alpha} \quad \text{(Equation 4)}$$

In Equation 4, $p_{mean} = \frac{1}{D} \sum_{n=(k-1)D+1}^{n=kD} p(\bar{s}_n|\hat{s}_n)$, *C* may denote the number of modulated symbols for a modulation scheme (e.g., 4 for QPSK, 8 for 8PSK), $\bar{s}_n$ may denote a hard decision symbol, and $\hat{s}_n$ may denote an equalized symbol. The a-posteriori probability $p(\bar{s}_n|\hat{s}_n)$ may be calculated according to equation (3.6) in Ran.

Equation 4 of Comparative Example 1 may differ from equation (3.8) in Ran, in that a mean probability $p_{mean}$ is used rather than a single probability $p(\bar{s}_n|\hat{s}_n)$ as used in Ran. This is because for each channel update, *D* symbols can contribute to the decision directed channel estimation in Comparative Example 1. In contrast, in Ran only a single symbol (per subcarrier per OFDM symbol) may be available to contribute. Therefore, the radio resource allocation difference between the narrowband and wideband multi-carrier system makes the techniques of Ran and Bolinth not directly applicable to embodiments relating to narrowband systems without pilots/training fields. For example, in Ran and Bolinth, and therefore in Comparative Example 1, the estimated CFO is not updated or tracked.

Another estimation technique is described in A. Patapoutian, "On Phase-Locked Loops and Kalman Filters," IEEE Trans. Commun., vol. 47, no. 5, pp. 670-672, May 1999, the contents of which is incorporated herein by reference in its entirety.

Patapoutian uses a 2nd order filtering technique which may be used to jointly track CFO and phase. The technique of Patapoutian is based on a Kalman filter (KF), an example of which is described below.

KF may use a process model **F** and a measurement model **H**, which may be defined according to Equation 5 and Equation 6 below:

$$\boldsymbol{\theta}_k = \boldsymbol{F}\boldsymbol{\theta}_{k-1} + \boldsymbol{w}_{k-1} \quad \text{(Equation 5)}$$

$$\boldsymbol{y}_k = \boldsymbol{H}\boldsymbol{\theta}_k + \boldsymbol{v}_k \quad \text{(Equation 6)}$$

In Equation 5, $\boldsymbol{w}_k$ may denote AWGN with covariance matrix $\boldsymbol{Q}_k$, and in Equation 6 $\boldsymbol{v}_k$ may denote AWGN with

covariance matrix $\boldsymbol{R}_k$. KF uses the following procedure to estimate the tracking parameter $\theta_k$ iteratively. KF may use 2nd order statistical information such as mean square error (MSE), denoted as MSE matrix $\boldsymbol{M}$, to control the update gain, which may be referred to as the Kalman gain $\boldsymbol{G}_k$.

According to KF, first a predicted tracking parameter $\hat{\theta}_{k|k-1}$ is determined according to Equation 7 below:

$$\hat{\boldsymbol{\theta}}_{k|k-1} = \boldsymbol{F}\hat{\boldsymbol{\theta}}_{k-1} \qquad \text{(Equation 7)}$$

Then, a predicted MSE matrix $\boldsymbol{M}_{k|k-1}$ is determined according to Equation 8 below:

$$\boldsymbol{M}_{k|k-1} = \boldsymbol{F}\boldsymbol{M}_{k-1}\boldsymbol{F}^T + \boldsymbol{Q}_k \qquad \text{(Equation 8)}$$

Then, the Kalman gain is determined according to Equation 9 below:

$$\boldsymbol{G}_k = \boldsymbol{M}_{k|k-1}\boldsymbol{H}^T\left(\boldsymbol{H}\boldsymbol{M}_{k|k-1}\boldsymbol{H}^T + \boldsymbol{R}_k\right)^{-1} \qquad \text{(Equation 9)}$$

An updated estimate $\hat{\theta}_k$ is then determined according to Equation 10 below:

$$\hat{\boldsymbol{\theta}}_k = \hat{\boldsymbol{\theta}}_{k|k-1} + \boldsymbol{G}_k\left(\boldsymbol{y}_k - \boldsymbol{H}\hat{\boldsymbol{\theta}}_{k|k-1}\right) \qquad \text{(Equation 10)}$$

Then, the updated MSE matrix $\boldsymbol{M}_k$ is determined according to Equation 11 below:

$$\boldsymbol{M}_k = \boldsymbol{M}_{k|k-1} - \boldsymbol{G}_k\boldsymbol{H}\boldsymbol{M}_{k|k-1} \qquad \text{(Equation 11)}$$

In Patapoutian, the process model is defined as $\boldsymbol{F} = \begin{bmatrix} 1 & D \\ 0 & 1 \end{bmatrix}$, the measurement model is defined as $\boldsymbol{H} = $ [1 0], the tracking parameter is defined as $\boldsymbol{\theta}_k = \begin{bmatrix} \varphi_k \\ \omega_k \end{bmatrix}$, where $\varphi_k = \arg(h_k)$ denotes the channel phase, $\omega_k$ denotes the true CFO at the at the kth update. $\boldsymbol{y}_k$ denotes a single phase estimate, and therefore the matrix form of $\boldsymbol{y}_k$, $\boldsymbol{v}_k$ and $\boldsymbol{R}_k$ may be written as scalars $y_k$, $v_k$ and $R_k$, respectively. $R_k$ denotes the variance of phase measurement noise $v_k$.

Then, the Kalman gain equation may be simplified according to Equation 12 below:

$$\boldsymbol{G}_k = \boldsymbol{M}_{k|k-1}\boldsymbol{H}^T / \left(\boldsymbol{H}\boldsymbol{M}_{k|k-1}\boldsymbol{H}^T + R_k\right) \qquad \text{(Equation 12)}$$

When considering time-invariant CFO (for example such that $\omega = \omega_0 = \omega_1 = \cdots = \omega_k = \cdots$), $w_{k-1}$ can be treated as very small values and $\boldsymbol{Q}_k$ can be set to $\boldsymbol{Q}_k = \boldsymbol{Q} = \begin{bmatrix} 5 \cdot 10^{-11} & 0 \\ 0 & 5 \cdot 10^{-11} \end{bmatrix}$. The MSE of the estimation error in $\hat{\varphi}_0 = \arg(\hat{h}_0)$ and $\hat{\omega}_0$ can be obtained using simulation in AWGN channel with a defined signal-to-noise ratio (SNR) condition, so that $\boldsymbol{M}_0$ can be pre-computed. The MSE of $v_k$ can be also obtained using simulation in AWGN channel with a defined SNR.

As another comparative example, referred to herein as Comparative Example 2, for a given SNR a constant $R$ may be defined to represent $R_k$ for all $k$ at a given SNR. Then $\hat{\boldsymbol{\theta}}_k = \begin{bmatrix} \hat{\varphi}_k \\ \hat{\omega} \end{bmatrix}$ may be calculated iteratively to obtain the kth update of the channel $\hat{h} = |\hat{h}_0|e^{j\hat{\varphi}_k}$ and the CFO $\hat{\omega}$. According to Comparative Example 2, the CFO $\hat{\omega}$ and phase

$\hat{\varphi}_k$ are updated jointly.

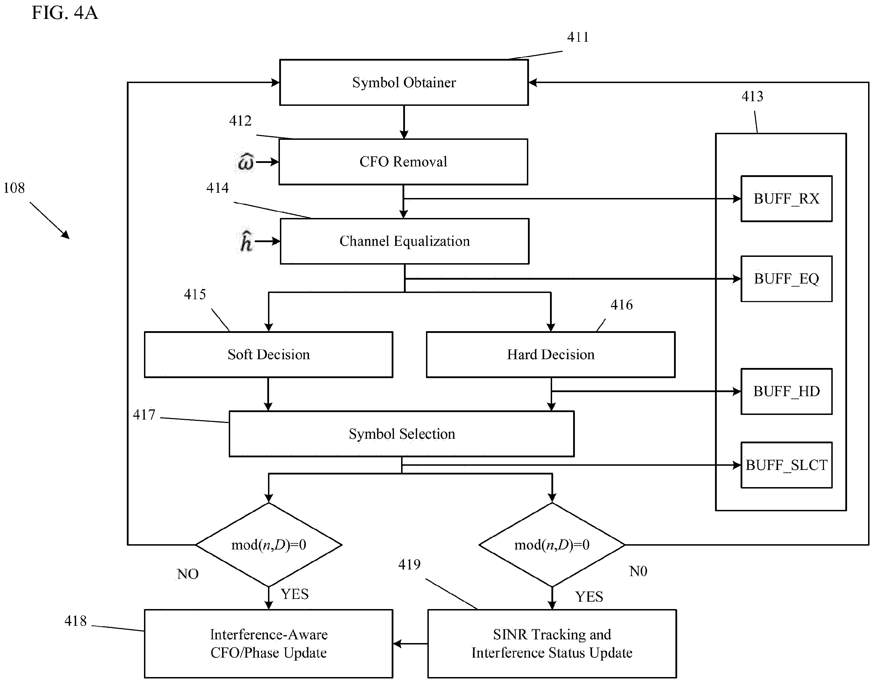

FIG. 4A is a block diagram illustrating an example of an estimation module, according to embodiments. According to embodiments, the estimation module 108 may operate according to one or both of a 1st order technique, which may be referred to as Example 1, and a 2nd order technique, which may be referred to as Example 2.

As shown in FIG. 4A, the estimation module 108 may include a signal to interference and noise ratio (SINR) tracking and interference status update module 419, which may enable the estimation module 108 to perform interference-aware CFO/phase tracking. The estimation module 108 may include an interference-aware CFO/phase update module 418 which may have the ability to minimize the impact of error propagation caused by interference by performing interference-aware CFO/phase tracking. According to embodiments, the estimation module 108 may perform decision directed channel estimation, which may use a log-likelihood ratio (LLR) based symbol selection method, for example using a soft decision module 415 and a hard decision module 416. For example, in embodiments, only selected symbols may be used for decision directed channel estimation. In contrast, the techniques of Ran and Bolinth, and in Comparative Example 1, use all available symbols for decision directed channel estimation. In addition, unlike the techniques in Ran and Bolinth, and in Comparative Example 1, embodiments may perform estimation without the presence of a training field (*e.g.,* a midamble) inserted in the packet payload, for example the data portion 204.

Accordingly, embodiments may differ from Comparative Example 1 and Comparative Example 2 in that embodiments may use packet payload, for example data symbols, to track CFO and phase. Further, embodiments may differ from Comparative Example 1 and Comparative Example 2 in that embodiments may consider interference when tracking CFO and phase.

For example, embodiments according to Example 1 may differ from the techniques of Ran, Bolinth, and Comparative Example 1, in that Example 1 may perform CFO tracking. In contrast, the techniques of Ran, Bolinth, and Comparative Example 1 do not update or track the CFO.

Further, embodiments according to Example 2 may differ from the techniques of Patapoutian and Comparative Example 2, in that Example 2 may perform phase update using 1st order techniques, and may perform only CFO tracking using KF. In contrast, the techniques the techniques of Patapoutian and Comparative Example 2 update both CFO and phase using KF. Accordingly, embodiments according to Example 2 may have increased performance in comparison with the techniques of Patapoutian and Comparative Example 2.

Referring to FIG. 4A, the receiver 104 may perform two different initialization procedures corresponding to the estimation module 108. For example, the estimation module 108 may be initialized using a system initialization procedure, which may be used to select a tracking algorithm, such as a tracking algorithm according to Example 1 or a tracking algorithm according to Example 2, and further may be used to select design parameters of the selected tracking algorithm. In embodiments, the system initialization procedure may be performed only once, for example when the receiver 104 or the estimation module 108 is initialized. In addition, the estimation module 108 may be initialized using a packet payload reception initialization procedure, which may be performed every time a new packet 200 is received.

According to the system initialization procedure, one or more system parameters may be selected. For example, the system initialization procedure may include selecting one or more of a CFO/phase update period $D$, a SINR update period $S$, a number $B$ of symbols used to update SINR, a channel update forgetting factor $\mu_c$, a buffer length $M \geq \max(D, B)$, a SINR threshold $SINR_{min}$ in dB for interference detection, and a minimum number $\tilde{B}_{min}$ of symbols which may be used for SINR estimation. In embodiments, CFO/phase update period $D$ and the SINR update period $S$ may be specified in units of symbols.

In embodiments, the system initialization procedure may also include determining whether to operate the estimation module 108 according to Example 1 or Example 2. For example, if a parameter *kf_enabled* is set to "false", KF may be disabled, and the estimation module may be operated using a 1st order technique, for example according to Example 1. Further, if the parameter *kf_enabled* is set to "true", KF may be enabled, and the estimation module may be operated using a 2nd order technique, for example according to Example 2.

If the parameter *kf_enabled* is set to "true", the system initialization procedure may include defining reference SINR points **$SINR_{dB}$**, preparing variance vector $\sigma_f^2$ of initial CFO errors at all SINR points in **$SINR_{dB}$**, and preparing a variance vector $\sigma_p^2$ of initial phase errors at all SINR points in **$SINR_{dB}$**.

In embodiments, the variance vectors $\sigma_f^2$ and $\sigma_p^2$ may be obtained by simulation in an AWGN channel without interference at a SNR point defined by **$SINR_{dB}$**. The values of $D$, $\sigma_f^2$ and $\sigma_p^2$ may depend on the length of training sequence (for example from the preamble portion 202) used for initial CFO and phase estimation.

If the parameter *kf_enabled* is set to "false", the system initialization procedure may include choosing an initial CFO update forgetting factor $\mu_f^0$, choosing a parameter $M_{minInterfSymb}$, a parameter $P_{coolDown}$, and a parameter $\rho_{coolDown}$, and calculating a parameter $M_{minInterfUpdate}$ according to Equation 13 below:

$$M_{minInterfUpdate} = \lfloor M_{minInterfSymb}/D \rfloor \quad \text{(Equation 13)}$$

In embodiments, the parameter $M_{minInterfSymb}$ may indicate a minimum duration of detected consecutive interference (in symbols) which may trigger a cooldown operation. In embodiments, the parameter $M_{minInterfSymb}$ may be set to a relatively large value to disable the cooldown operation. Further, the parameter $P_{coolDown}$ may indicate a percentage of cooldown duration with respect to the duration of the detected consecutive interference. In addition, the parameter $\rho_{coolDown}$ may indicate a percentage of CFO tracking forgetting factor with respect to the initial value when cooldown operation is triggered. Further, the parameter $M_{minInterfUpdate}$ may indicate a minimum duration of detected consecutive interference (in number of CFO/phase updates) which may trigger the cooldown operation

According to the packet payload reception initialization procedure, a parameter *interference_detected* may be set to "false". In addition, an instant SINR estimate $\widehat{SINR}_{dB}$, an initial channel estimate $\hat{h}_0$, and an initial CFO estimate $\hat{\omega}_0$ may be obtained from the preamble portion 202 of the packet 200, and the channel estimate $\hat{h}$ and the estimated CFO $\hat{\omega}$ may be initialized according to Equation 14 and Equation 15 below:

$$\hat{h} = \hat{h}_0 \quad \text{(Equation 14)}$$

$$\hat{\omega} = \hat{\omega}_0 \quad \text{(Equation 15)}$$

In embodiments, the packet payload reception initialization procedure may include initializing the buffers BUFF_RX, BUFF_EQ, BUFF_HD, BUFF_SLCT to a value of zero ("0"). In embodiments, the buffers BUFF_RX, BUFF_EQ, BUFF_HD, BUFF _SLCT may each have a size *M*. In embodiments, the buffers BUFF_RX, BUFF_EQ, and BUFF_HD may store complex values, and the buffer BUFF_SLCT may store real values. Each buffer may use indices $i \in [1, M]$ to locate data, where *i* indicates the relative time instant the data is stored. For example, the newest or most recent value may be stored at location with index $i = M$, and the oldest value may be stored at location with index $i = 1$. Although FIG. 4A illustrates the buffers BUFF_RX, BUFF_EQ, BUFF_HD, BUFF_SLCT as being included in a single buffer 413, embodiments are not limited thereto. For example, in embodiments one or more of the buffers BUFF_RX, BUFF_EQ, BUFF_HD, BUFF _SLCT may be separate buffers.

If the parameter *kf_enabled* is set to "true", the packet payload reception initialization procedure may include determining a SINR index $i_{sinr}$ which minimizes $\left| \widehat{SINR}_{dB} - SINR_{dB} \right|$, and then determining ***M***, **Q**, and $\theta_0$ according to Equation 16, Equation 17, and Equation 18 below:

$$\boldsymbol{M} = \begin{bmatrix} \sigma_p^2(i_{sinr}) & 0 \\ 0 & \sigma_f^2(i_{sinr}) \end{bmatrix} \quad \text{(Equation 16)}$$

$$\boldsymbol{Q} = \begin{bmatrix} 5 \cdot 10^{-11} & 0 \\ 0 & 5 \cdot 10^{-11} \end{bmatrix} \quad \text{(Equation 17)}$$

$$\boldsymbol{\theta}_0 = \begin{bmatrix} \arg(\hat{h}) \\ \hat{\omega} \end{bmatrix} \quad \text{(Equation 18)}$$

If the parameter *kf_enabled* is set to "false", the packet payload reception initialization procedure may include setting parameters $C_{interfUpdate}$ and $C_{coolDown}$ to zero ("0"), and setting the parameter *cooldown* to "false". In embodiments, the parameter $C_{interfUpdate}$ may be a counter which indicates the detected consecutive interference duration in number of CFO/phase updates, and the parameter $C_{coolDown}$ may indicate a cooldown counter. The parameter *cooldown* may indicate whether cooldown is enabled or not.

Referring to FIG. 4A, the estimation module 108 may include a symbol obtainer 411. After the initialization procedures discussed above are performed, the symbol obtainer 411 may obtain an *n*-th symbol $r_n$. Then, the CFO removal module 412 may calculate a compensated symbol $q_n$ corresponding to the symbol $r_n$ according to Equation 19 below:

$$q_n = r_n e^{j\hat{\omega}d}, d = mod(n-1, D) \qquad \text{(Equation 19)}$$

In Equation 19, *d* may denote the relative symbol index in an CFO/phase update block, and may be reset to zero ("0") at the first symbol of an update block, *e.g.* at symbol index indices $n = (k-1)D + 1$, $k \in [1, K]$. Compensated symbol $q_n$ may be stored in the buffer BUFF_RX, which may contain *M* consecutive symbols in time, for example compensated symbols $q_{n-M+1}$, $q_{n-M+2}$, ... , $q_n$.

The estimation module 108 may further include a channel equalization module 414. The channel equalization module 414 may calculate an equalized compensated symbol $\hat{s}_n$ according to Equation 20 below:

$$\hat{s}_n = q_n / \hat{h} \qquad \text{(Equation 20)}$$

In Equation 20, $\hat{h}$ may denote the latest or most recent updated channel estimate for processing the *n*-th symbol. Equalized compensated symbol $\hat{s}_n$ may be stored in the buffer BUFF_EQ which may contain M consecutive symbols in time, for example equalized compensated symbols $\hat{s}_{n-M+1}$, $\hat{s}_{n-M+2}$, ... , $\hat{s}_n$. In embodiments, the channel equalization may refer not to removing multipath channel, and instead may refer to removing phase rotation due to CFO, for example based on treating the phase as part of the flat channel, as discussed above.

The equalized compensated symbol $\hat{s}_n$ may be provided to the soft decision module 415 and the hard decision module 416

The soft decision module 415 may output soft bits obtained from equalized compensated symbol $\hat{s}_n$. A soft bit output may be an approximate log-likelihood ratio (*LLR*), and may be calculated according to Equation 21 below:

$$LLR = \min_{s \in S_1} |s - \hat{s}_n|^2 - \min_{s \in S_0} |s - \hat{s}_n|^2 \qquad \text{(Equation 21)}$$

In Equation 21, $S_0$ may denote a set to collect all possible transmitted symbols when the transmitted hard bit is 0, and $S_1$ may denote a set to collect all possible transmitted symbols when the transmitted hard bit is 1. For each $\hat{s}_n$, there are *O LLR* soft bits, where *O* denotes the modulation order. In embodiments, the soft bits may be provided as inputs to a channel decoder, for example the decoding module 110.

The hard decision module 416 may output hard decision symbol $\bar{s}_n$, which may be calculated according to Equation 22 below:

$$\bar{s}_n = \arg\min_{\bar{s}_n \in \{S_0, S_1\}} |\bar{s}_n - \hat{s}_n|^2 \qquad \text{(Equation 22)}$$

Hard decision symbol $\bar{s}_n$ may be stored in the buffer BUFF_HD, which may contain *M* consecutive symbols in time, for example hard decision symbols $\bar{s}_{n-M+1}$, $\bar{s}_{n-M+2}$, ..., $\bar{s}_n$

In embodiments, the soft decision module 415 and the hard decision module 416 may share the computations in $|\bar{s}_n - \hat{s}_n|^2$ (for hard decision) and $|s - \hat{s}_n|^2$ (for soft decision).

The estimation module 108 may further include a symbol selection module 417. The symbol selection module 417 may select a received symbol to be used for decision directed phase update. For example, the symbol selection module 417 may select a symbol based on the symbol based on all of the absolute values of the LLR soft bits corresponding to the symbol being larger than a threshold $\gamma_{dd}$, for example such that $|LLR| > \gamma_{dd}$. In embodiments, a selection flag, which may for example have a value of one ("1") if a symbol is selected, and a value of zero ("0") if the symbol is not selected, may be stored in the buffer BUFF_SLCT.

The estimation module 108 may further include interference-aware CFO/phase update module 418, which may be activated or operated by the estimation module 108 every $D$ symbols, for example at symbol $n = kD$ ($k \in [1, K]$).

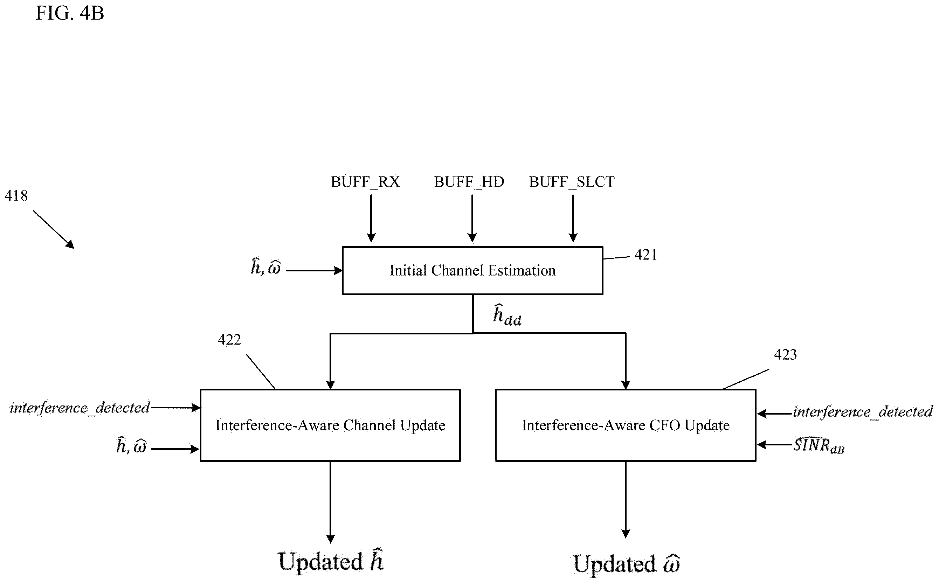

FIG. 4B is a block diagram illustrating an example of an interference-aware CFO/phase update module, according to embodiments. As shown in FIG. 4B, the interference-aware CFO/phase update module 418 may include an initial channel estimation module 421, an interference-aware channel update module 422, and an interference-aware CFO update module 423.

In embodiments, a decision feedback channel estimation procedure may be performed by the soft decision module 415, the hard decision module 416, the symbol selection module 417, and the initial channel estimation module 421. The initial channel estimation module 421 may calculate an initial channel estimate $\hat{h}_{dd}$ for a next CFO/phase update block according to Equation 22 and Equation 23 below:

$$\hat{h}_{dd} = \frac{1}{\tilde{D}} \sum_{i=M-D+1}^{M} \text{BUFF\_RX}(i) \cdot \text{BUFF\_HD}^*(i) \cdot \text{BUFF\_SLCT}(i), \text{when } \tilde{D} > 0 \quad \text{(Equation 22)}$$

$$\hat{h}_{dd} = \hat{h}, \text{when } \tilde{D} = 0 \quad \text{(Equation 23)}$$

In Equation 22 and Equation 23, $i$ ($i \in [1, M]$) may denote the index for data stored in the buffer 413, $\tilde{D}$ may denote the number of selected symbols which contribute to $\hat{h}_{dd}$, i.e., the number of entries having a value of one ("1") in BUFF\_SLCT for $i \in [M - D + 1, M]$. In embodiments, the initial channel estimation module 421 may rotate the phase to obtain a channel estimate for the ($k + 1$)-th update block (for example at the ($n + 1$)th symbol) according to Equation 24 below:

$$\hat{h}_{dd} = \hat{h}_{dd} e^{j\hat{\omega}D} \quad \text{(Equation 23)}$$

According to embodiments, the interference-aware channel update module 422 and the interference-aware CFO update module 423 may operate as follows. First, the interference-aware channel update module 422 may predict channel estimate for the next update block according to Equation 24 below:

$$\hat{h}_{old} = \hat{h} e^{j\hat{\omega}D} \quad \text{(Equation 24)}$$

If the parameter *interference_detected* is set to "true", the interference-aware channel update module 422 may update the channel estimate according to Equation 25 below:

$$\hat{h} = \hat{h}_{old} \quad \text{(Equation 25)}$$

Then, if the parameter *kf_enabled* is set to "true", the interference-aware CFO update module 423 may operate according to Example 2, and may update the estimated CFO $\hat{\omega}$ using Equations 5-11, using a value of $R = 4\pi^2$, and using $y_k = \arg(\hat{h}_{dd})$. If the parameter *kf_enabled* is set to "false", the interference-aware CFO update module 423 may operate according to Example 1, and may not update the estimated CFO $\hat{\omega}$, and may increment the parameter $C_{interfUpdate}$.

If the parameter *interference_detected* is set to "false", the interference-aware channel update module 422 may obtain a phase difference $\varphi$ according to Equation 26 below:

$$\varphi = arg(\hat{h}_{dd}\hat{h}^*) \quad \text{(Equation 26)}$$

The interference-aware channel update module 422 may then obtain a decision directed channel estimate $\hat{h}_{cur}$ for the next block according to Equation 27 below:

$$\hat{h}_{cur} = \hat{h} e^{j\varphi} \quad \text{(Equation 27)}$$

The interference-aware channel update module 422 may then obtain a final updated channel estimate for the next block according to Equation 28 below:

$$\hat{h} = (1 - \mu_c)\hat{h}_{old} + \mu_c\hat{h}_{cur} \qquad \text{(Equation 28)}$$

Then, if the parameter *kf_enabled* is set to "true", the interference-aware CFO update module 423 may operate according to Example 2, and may find an SINR index $i_{sinr}$ to minimize $\left|\widehat{SINR}_{dB} - \boldsymbol{SINR}_{dB}\right|$, where $\widehat{SINR}_{dB}$ is the latest SINR estimate. Then, the interference-aware CFO update module 423 may update the estimated CFO $\hat{\omega}$ using Equations 5-11, using a value of $R = \boldsymbol{\sigma}_p^2(i_{sinr})$, and using $y_k = \arg(\hat{h}_{dd})$.

If the parameter *kf_enabled* is set to "false", the interference-aware CFO update module 423 may operate according to Example 1, and may determine whether a value of the parameter $C_{interfUpdate}$ is greater than or equal to a value of the parameter $M_{minInterfUpdate}$. If so, the interference-aware CFO update module 423 may set the parameter *cooldown* to "true", may set the parameter $C_{coolDown}$ equal to zero ("0"), and may set the parameter $M_{durCoolDown}$ according to Equation 29 below:

$$M_{durCoolDown} = \left\lfloor C_{interfUpdate} * P_{coolDown} \right\rfloor \qquad \text{(Equation 29)}$$

The interference-aware CFO update module 423 may then set the parameter $C_{interfUpdate}$ equal to zero ("0").

If the parameter *cooldown* is set to "true", the interference-aware CFO update module 423 may perform a cooldown procedure. For example, the interference-aware CFO update module 423 may determine whether a value of the parameter $C_{coolDown}$ is less than a value of the parameter $M_{durCoolDown}$. If so, the interference-aware CFO update module 423 may increment the parameter $C_{coolDown}$, and may set a value of the CFO update forgetting factor $\mu_f$ according to Equation 30 below:

$$\mu_f = \rho_{coolDown}\mu_f^0 \qquad \text{(Equation 30)}$$

If the value of the parameter $C_{coolDown}$ is not less than the value of the parameter $M_{durCoolDown}$, the interference-aware CFO update module 423 may reset the value of the CFO update forgetting factor $\mu_f$ to be equal to the initial CFO update forgetting factor $\mu_f^0$, and may set the parameter *cooldown* equal to "false" in order to end the cooldown procedure.

Next, the interference-aware CFO update module 423 may update the CFO estimate $\hat{\omega}$ according to Equation 31 below:

$$\hat{\omega} = (1 - \mu_f)\hat{\omega} + \mu_f(\varphi/D) \qquad \text{(Equation 31)}$$

Referring again to FIG. 4A, the estimation module 108 may further include a SINR tracking and interference status update module 419, which may be activated or operated by the estimation module 108 every $S$ symbols, for example at symbol $n = kS$ ($k \in [1, K]$).

First, the SINR tracking and interference status update module 419 may update the instant SINR estimate $\widehat{SINR}_{dB}$ according to Equation 32 below:

$$\widehat{SINR}_{dB} = \begin{cases} 10 \cdot \log10\left(\frac{\hat{\sigma}_{sn}^2 - \hat{\sigma}_n^2}{\hat{\sigma}_n^2}\right), & \tilde{B} \geq \tilde{B}_{min} \\ SINR_{min}, & \tilde{B} < \tilde{B}_{min} \end{cases} \qquad \text{(Equation 32)}$$

In Equation 32, $\hat{\sigma}_n^2$ may denote the variance of noise and interference, and may be determined according to Equation 33 below:

$$\hat{\sigma}_n^2 = \frac{1}{\tilde{B}-1} \sum_{i=M-B+1}^{M} |BUFF\_EQ(i) - BUFF\_HD(i) - \overline{w}|^2 \cdot BUFF\_SLCT(i) \qquad \text{(Equation 33)}$$

In Equation 33, $\tilde{B}$ may denote a number of selected symbols which contribute to the SINR estimation, for example the number entries having a value of one ("1") in the buffer BUFF_SLCT at indices $i \in [M - B + 1, M]$.

Further, $\overline{w}$ may denote a mean of noise and interference symbols, and may be determined according to Equation 34 below:

$$\overline{w} = \frac{1}{\tilde{B}} \sum_{i=M-B+1}^{M} \left( BUFF\_EQ(i) - BUFF\_HD(i) \right) \cdot BUFF\_SLCT(i) \qquad \text{(Equation 34)}$$

In Equation 32, $\hat{\sigma}_{sn}^2$ may denote the variance of signal, noise and interference, and may be determined according to Equation 35 below:

$$\hat{\sigma}_{sn}^2 = \frac{1}{\tilde{B}-1} \sum_{i=M-B+1}^{M} |BUFF\_EQ(i) - \overline{s}|^2 \cdot BUFF\_SLCT(i) \qquad \text{(Equation 35)}$$

In Equation 35, $\overline{s}$ may denote the mean of signal, noise and interference symbols, and may be determined according to Equation 36 below:

$$\overline{s} = \frac{1}{\tilde{B}} \sum_{i=M-B+1}^{M} BUFF\_EQ(i) \cdot BUFF\_SLCT(i) \qquad \text{(Equation 36)}$$

Then, if $\widehat{SINR}_{dB} \geq SINR_{min}$, the SINR tracking and interference status update module 419 may set the parameter *interference_detected* equal to "false", and may otherwise set the parameter *interference_detected* equal to "true".

Example values of some of the parameters discussed above are shown in Table 1 below.

TABLE 1 - Example Values of Parameters

| Parameter | Parameter explanation | Example Value |
|---|---|---|
| $D$ | CFO/phase update period in symbols | 12 |
| $S$ | SINR update period in symbols (the parameter affects the SINR estimation latency) | 1 |
| $B$ | Maximum number of symbols used for SINR estimation | 24 |
| $M$ | The length of buffers in symbols | 24 |
| $\mu_c$ | Channel update forgetting factor | 1 |
| $\mu_f^0$ | Initial CFO update forgetting factor | 1/16 |
| $\tilde{B}_{min}$ | Minimum number of symbols used for SINR estimation | 5 |
| $SINR_{dB}$ | Defined discrete reference SINR points in dB | 3,4,5,...,18,19 |
| $SINR_{min}$ | Minimum SINR value (dB) to make decision that there is no interference | 1 |
| $\widehat{SINR}_{dB}$ | Instant SINR estimate in dB | N/A |

(continued)

| Parameter | Parameter explanation | Example Value |
|---|---|---|
| $\gamma_{dd}$ | *LLR* soft bit threshold to select a symbol for decision directed channel/phase estimation | 0.6 for QPSK, 0.2 for 8PSK, 0.09 for 16QAM |
| $M_{minInterfSymb}$ | Minimum duration of detected consecutive interference (in symbols) required to trigger the cool down operation (set to a relatively large value to disable the cool down operation) | 60 |
| $P_{coolDown}$ | Percentage of cool down duration with respect to the duration of the detected consecutive interference | 0.8 |
| $\rho_{coolDown}$ | Percentage of CFO tracking forgetting factor with respect to the initial value when cool down is triggered | 0.5 |

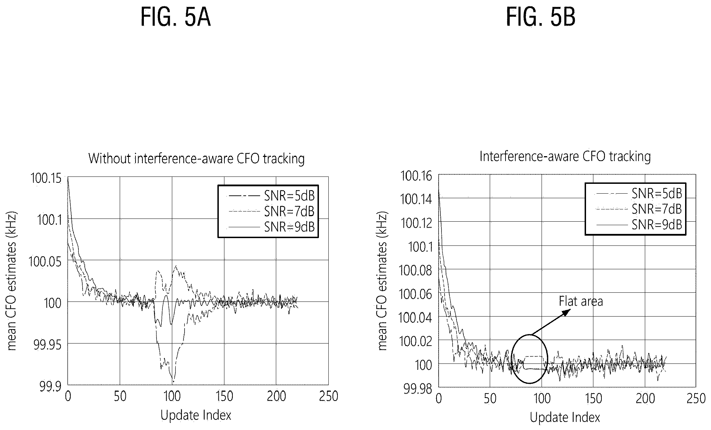

FIGS. 5A-5D are graphs illustrating simulated performance of an estimation module, according to embodiments. As discussed above, embodiments may relate to interference-aware tracking. According to embodiments, performance of the receiver 104 may be used to determine whether the techniques according to Example 1 are used. Assuming the trajectory of CFO estimates is available at the receiver 104, the receiver 104 may be injected with a simulated packet having noise and an interference to test the pattern of the CFO trajectory. If the estimation module 108 is operated according to Example 1 as shown in FIG. 5B, a "flat area" may appear in the trajectory. This may be caused by the CFO estimate holding, or not changing, for a certain time duration when interference is detected, as discussed above. As shown in FIG. 5A, when the receiver 104 is operated without interference-aware tracking, the flat area may not appear.

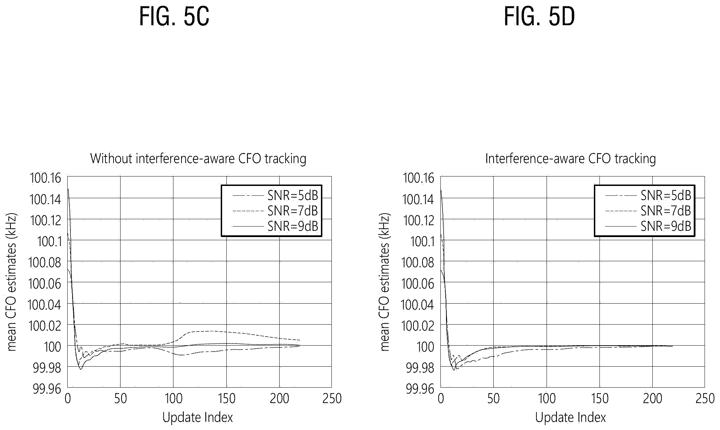

As shown in FIGS. 5C-5D, if the estimation module 108 is operated according to Example 2, it may be more difficult to detect whether the techniques according to Example 2 are used, according to the trajectory difference between the cases with interference-aware tracking disabled as in FIG. 5C, and enabled as in FIG. 5D. As shown in FIGS. 5C-5D, the KF may smooth the CFO trajectory with the help of Kalman gain computation.

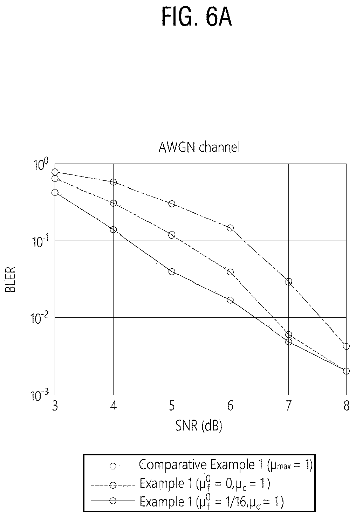

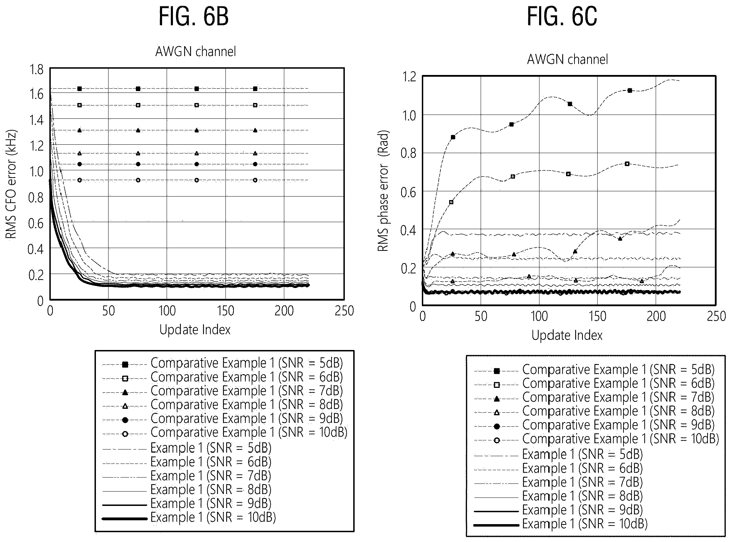

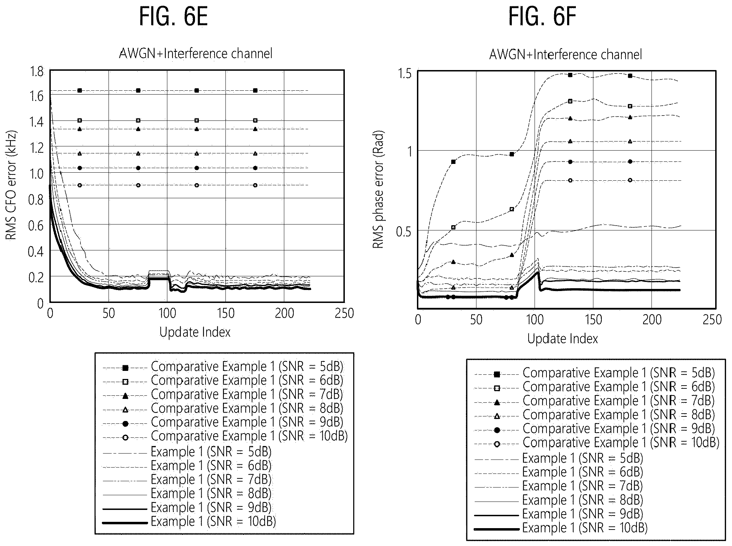

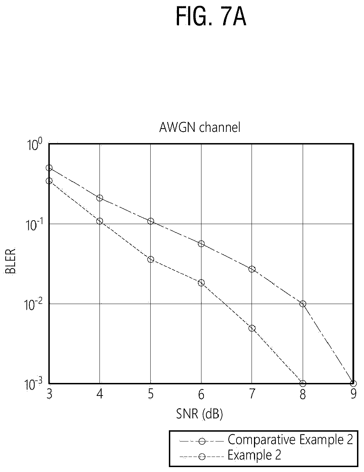

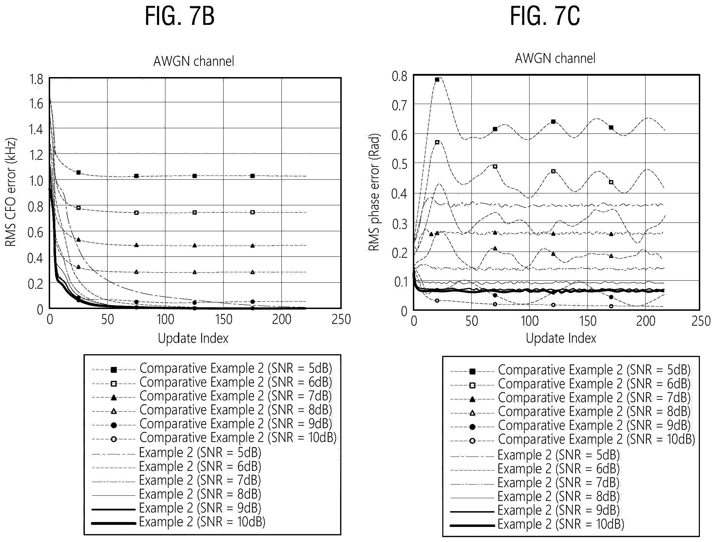

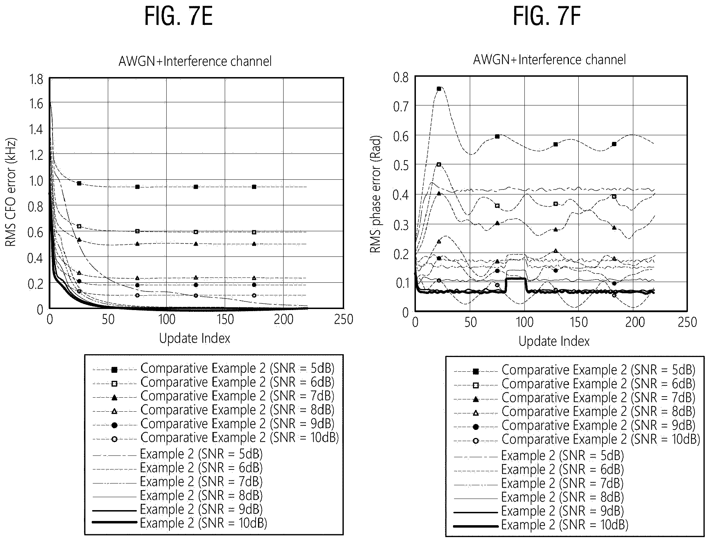

Embodiments described above, for example according to Example 1 and Example 2, may outperform other techniques, for example the techniques corresponding to Comparative Example 1 and Comparative Example 2, in interference-free environments, and may therefore provide improved communication quality and increased throughput. Evidence of this is provided below with respect to FIGS. 6A-6C and 7A-7C.

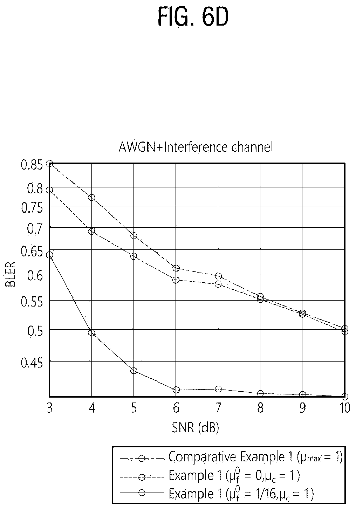

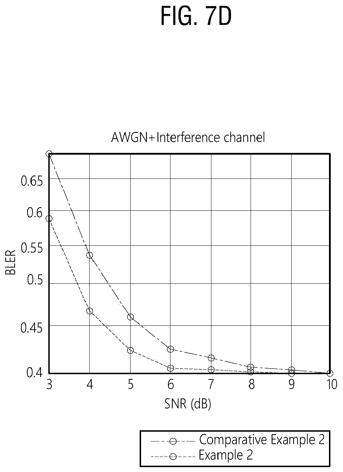

In addition, embodiments described above, for example according to Example 1 and Example 2, may suppress error propagation caused by interference, thus further improving communication quality and further increasing throughput under interference environments. Other techniques, for example the techniques corresponding to Comparative Example 1 and Comparative Example 2, may not have interference-awareness in terms of CFO/phase tracking. Evidence of this is provided below with respect to FIGS. 6D-6F and 7D-7F.

The proposed tracking methods may not require pilot/training field inserted in the payload, and thus may improve the spectral efficiency of wireless communication systems. In embodiments, Example 1 may exhibit lower performance than Example 2, however Example 2 may have a higher computational complexity than Example 1.

FIGS. 6A-6F, 7A-7F, and 8A-8F, 9A-9B, and 10 are graphs illustrating examples of CFO estimation and channel estimation performance, according to embodiments. In particular, FIGS. 6A-6F, 7A-7F, and 8A-8F, 9A-9B, and 10, show simulated performance results of Example 1, Example 2, Comparative Example 1, and Comparative Example 2 in various simulated scenarios, using AWGN and AWGN+Interference channels. The interference modelling used 100us length with signal-to-interference ratio (SIR) as -10dB. The parameter settings in the system initialization use the default value defined in Table 1, if not otherwise mentioned. The simulated packet had a payload length 1500us, which was divided into 5 code blocks. Each code block had a CRC. In terms of performance metrics, block error rate (BLER), RMS CFO error in kHz, and RMS phase error in Radian (Rad) are illustrated.

FIGS. 6A-6F are graphs illustrating simulated comparisons between Example 1 and Comparative Example 1, according to embodiments. As shown in FIG. 6A, even when Example 1 does not consider CFO tracking (for example as shown in the curve with $\mu_f^0 = 0$ to disable the CFO tracking), its performance is still better than that of Comparative Example 1. This is because the decision directed channel estimation of Example 1 may use a "symbol selection" feature, while in Comparative Example 1, all symbols are selected for decision directed channel estimation. With CFO tracking

( $\mu_f^0 > 0$ ), the performance of Example 1 further improves.

As shown in FIGS. 6C-6B, for Example using $\mu_f^0 = 1/16$, the CFO error may converge to relatively small values very quickly, and the phase error may be maintained to a relatively small level. Because Comparative Example 1 does not reduce the CFO error further in the payload duration, Comparative Example 1 may suffer from large phase error which may lead to BLER performance degradation shown in FIG. 6A.

As shown in FIGS. 6D-6F, because Comparative Example 1 cannot correct errors caused by interference, there is a large phase error when interference appears, due to error propagation. This phase error further degrades the BLER performance as shown in Fig. 6A. In contrast, Example 1 may effectively suppress the phase error to a small level, which may improve the BLER performance.

FIGS. 7A-7F are graphs illustrating simulated comparisons between Example 2 and Comparative Example 2, according to embodiments. As shown in FIGS. 7B-7C, Example 2 may converge to a smaller CFO error than that Comparative Example 2. Moreover, Example 2 may have a more stable phase estimation performance, without the performance fluctuation as observed in Comparative Example 2. This may be because Example 2 decouples the CFO and phase update (KF is only responsible for the CFO update), while in Comparative Example 2, KF is responsible for both the CFO and phase update. Therefore, Fig. 7A shows that Example 2 outperforms Comparative Example 2 in terms of BLER. When interference is present, similar observations can be found, as shown in FIGS. 7D-7F.

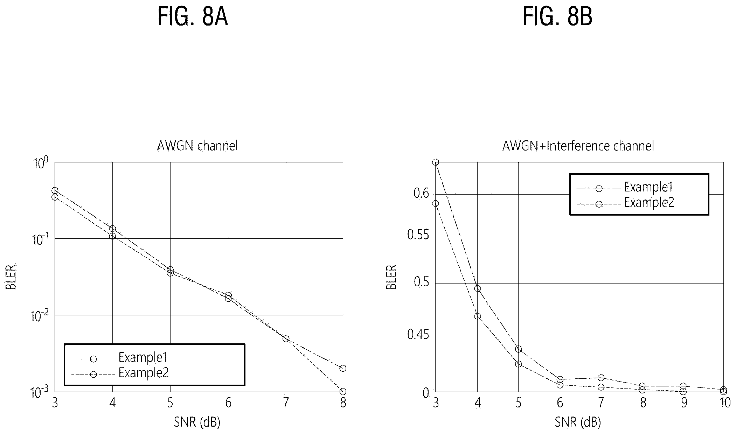

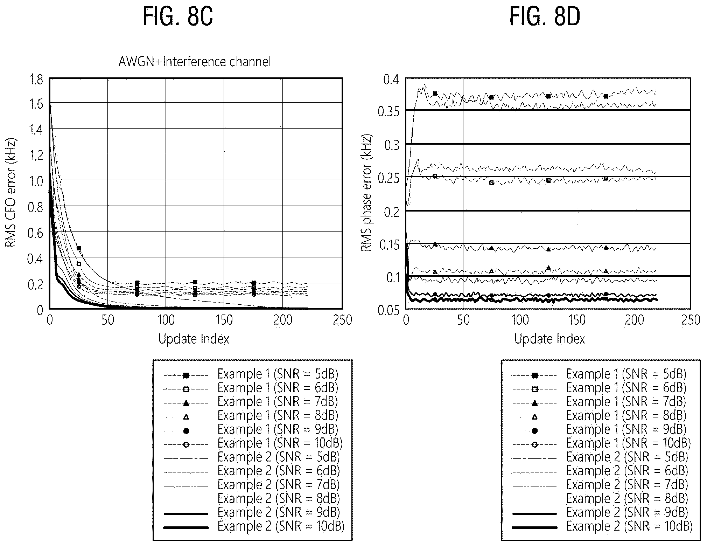

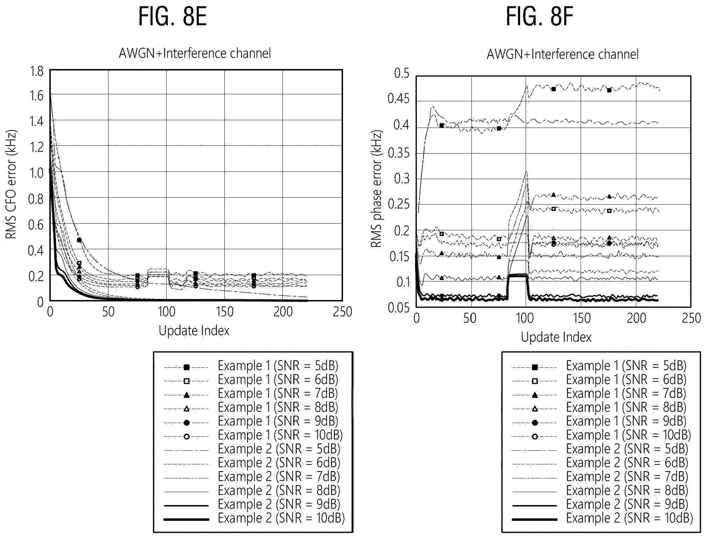

FIGS. 8A-8F are graphs illustrating simulated comparisons between Example 1 and Example 2, according to embodiments. As shown in FIGS. 8A-8F, Example 2 may outperform Example 1 in both AWGN and AWGN + Interference channels. However, Example 2 may have a higher computation complexity, as it may involve the calculation of 2nd order statistics $M_k$ and update gain (i.e., Kalman gain $G_k$) in every update. For Example 1, the update gain may be controlled by pre-defined constant parameters $\mu_c$ and $\mu_f^0$.

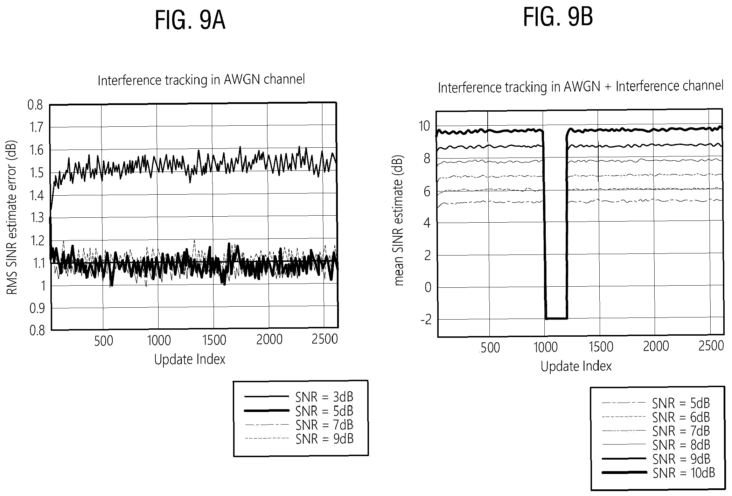

FIGS. 9A-9B are graphs illustrating examples of the simulated performance of SINR tracking and interference status update module 419, according to embodiments. For example, FIG. 9A shows an example of the SINR tracking performance in terms of RMS SINR estimation error in AWGN channel. As shown in FIG. 9A, the SINR error may be around 1 dB for true SNR larger than SNR = 5dB. Therefore, it may be acceptable have 1 dB search step in the pre-defined SINR points $SINR_{dB}$, as shown in Table 1. FIG. 9B shows an example of the mean SINR trajectory when interference is present. As shown in FIG. 9B, the interference may be detected with a SINR of around -2dB. This may assist in selecting the design parameter $SINR_{min}$ in Table 1, e.g., $SINR_{min}$ may be larger than -2 dB in order to detect the interference.

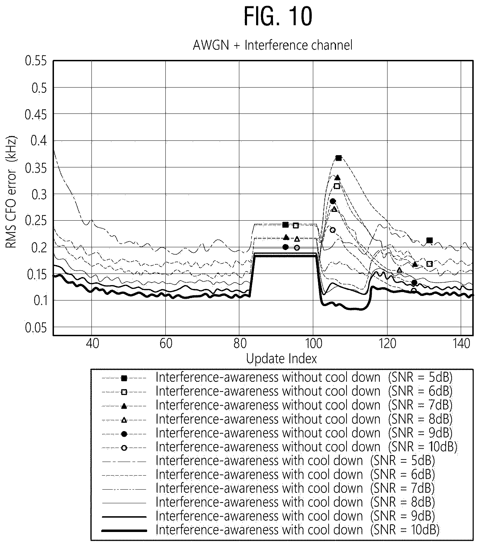

FIG. 10 is a graph illustrating an example of the simulated performance of a cooldown process used in Example 1, according to embodiments. As described above, a cooldown feature may be used in Example 1 to reduce (controlled by the parameter $\rho_{coolDown}$) the CFO tracking forgetting factor $\mu_f$ for a contain duration (controlled by the parameter $P_{coolDown}$) after an interference is detected and disappears. The cooldown feature may assist in reducing a CFO error jump after the interference disappears, as shown in Fig. 10 below.

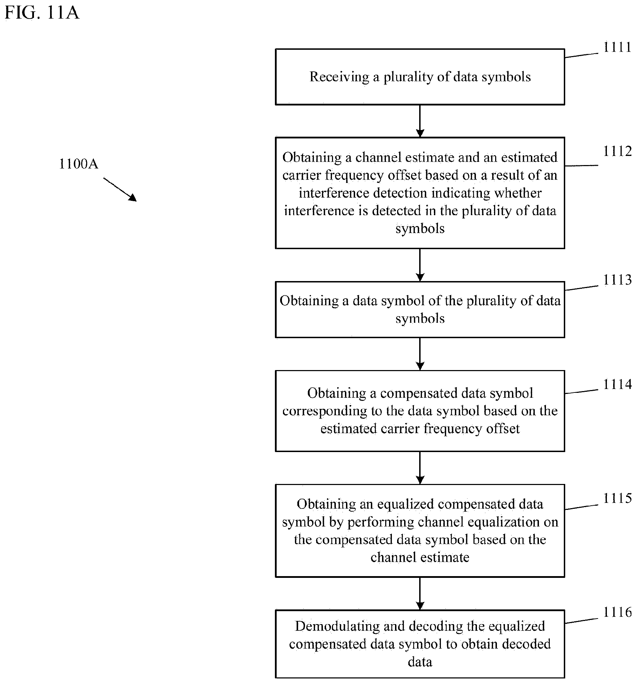

FIG. 11A is a flowchart of a process 1100A for controlling a communication device, according to embodiments. In some implementations, one or more process blocks of FIG. 11A may be performed by the estimation module 108, or any other element described above.

As shown in FIG. 11A, at operation 1111 the process 1100A may include receiving, by a receiver from a transmitter, a plurality of data symbols. In embodiments, the plurality of data symbols may be included in the data portion 204 of the packet 200.

As further shown in FIG. 11A, at operation 1112 the process 1100A may include obtaining a channel estimate and an estimated carrier frequency offset based on a result of an interference detection indicating whether interference is detected in the plurality of data symbols. In embodiments, the channel estimate may correspond to channel estimate $\hat{h}$ discussed above, the estimated carrier frequency offset may correspond to the estimated CFO $\hat{\omega}$ discussed above, and the result of the interference detection may correspond to the parameter *interference_detected* discussed above.

As further shown in FIG. 11A, at operation 1113 the process 1100A may include obtaining a data symbol from among the plurality of data symbols. In embodiments, the data symbol may correspond to the symbol $r_n$ discussed above.

As further shown in FIG. 11A, at operation 1114 the process 1100A may include obtaining a compensated data symbol corresponding to the data symbol based on the estimated carrier frequency offset. In embodiments, the compensated data symbol may correspond to the compensated symbol $q_n$ discussed above.

As further shown in FIG. 11A, at operation 1115 the process 1100A may include obtaining an equalized compensated data symbol by performing channel equalization on the compensated data symbol based on the channel estimate. In embodiments, the equalized compensated data symbol may correspond to the equalized compensated symbol $\hat{s}_n$ discussed above.

As further shown in FIG. 11A, at operation 1116 the process 1100A may include demodulating and decoding the equalized compensated data symbol to obtain decoded data.

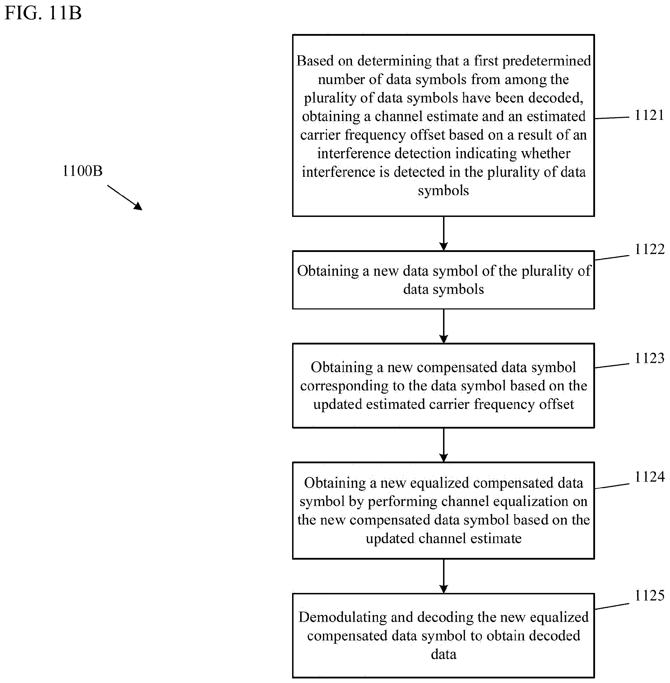

FIG. 11B is a flowchart of a process 1100B for controlling a communication device, according to embodiments. In some implementations, one or more process blocks of FIG. 11B may be performed by the estimation module 108, or any other element described above.

As shown in FIG. 11B, at operation 1121 the process 1100B may include, based on determining that a first predetermined number of data symbols from among the plurality of data symbols have been decoded, obtaining an updated carrier frequency offset and an updated channel estimate based on the result of the interference detection. In embodiments, the first predetermined number of data symbols may correspond to the CFO/phase update period $D$ discussed above.

As further shown in FIG. 11B, at operation 1122 the process 1100B may include obtaining a new data symbol of the plurality of data symbols.

As further shown in FIG. 11B, at operation 1123 the process 1100B may include obtaining a new compensated data symbol corresponding to the new data symbol based on the updated carrier frequency offset.

As further shown in FIG. 11B, at operation 1124 the process 1100B may include obtaining a new equalized compensated data symbol by performing the channel equalization on the new compensated data symbol based on the updated channel estimate.

As further shown in FIG. 11B, at operation 1125 the process 1100B may include demodulating and decoding the new equalized compensated data symbol to obtain new decoded data.

In embodiments, an initial channel estimate may be determined based on the compensated data symbol and the equalized compensated data symbol, and at least one of the updated channel estimate and the updated carrier frequency offset may be calculated based on the initial channel estimate and the result of the interference detection. In embodiments, the initial channel estimate may correspond to the initial channel estimate $\hat{h}_{dd}$ discussed above.

In embodiments, based on the result of the interference detection indicating that the interference is detected the updated channel estimate may be calculated based on the channel estimate and the estimated carrier frequency offset; based on Kalman filtering being enabled, calculating the updated carrier frequency offset based on the initial channel estimate using the Kalman filtering; and based on the Kalman filtering not being enabled, setting the updated carrier frequency offset equal to the estimated carrier frequency offset. In embodiments, the Kalman filtering being enabled may correspond to Example 2 discussed above, and the Kalman filtering not being enabled may correspond to Example 1 discussed above.

In embodiments, based on the result of the interference detection indicating that the interference is not detected, the updated channel estimate may be calculated based on the channel estimate and a phase difference between the channel estimate and the initial channel estimate; based on Kalman filtering being enabled, the updated carrier frequency offset may be calculated using the Kalman filtering; and based on the Kalman filtering not being enabled, the updated carrier frequency offset may be calculated based on the estimated carrier frequency offset and the phase difference between the channel estimate and the initial channel estimate. In embodiments, the Kalman filtering being enabled may correspond to Example 2 discussed above, and the Kalman filtering not being enabled may correspond to Example 1 discussed above.

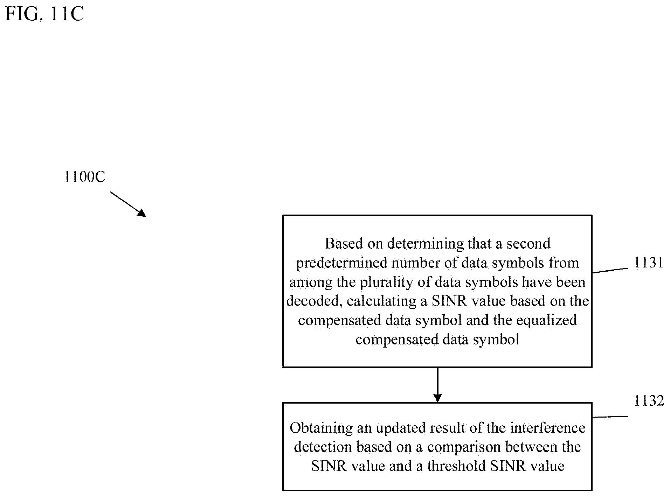

FIG. 11C is a flowchart of a process 1100C for controlling a communication device, according to embodiments. In some implementations, one or more process blocks of FIG. 11C may be performed by the estimation module 108, the SINR tracking and interference status update module 419, or any other element described above.

As shown in FIG. 11C, at operation 1131 the process 1100C may include, based on determining that a second predetermined number of data symbols from among the plurality of data symbols have been decoded. In embodiments, the second predetermined number of data symbols may correspond to the SINR update period S discussed above.

As further shown in FIG. 11C, at operation 1132 the process 1100C may include calculating a signal to interference and noise ratio (SINR) value based on the compensated data symbol and the equalized compensated data symbol.

As further shown in FIG. 11C, at operation 1133 the process 1100C may include obtaining an updated result of the interference detection based on a comparison between the SINR value and a threshold SINR value.

Although FIGS. 11A-11C show example blocks of the processes 1100A, 1100B, and 1100C, in some implementations, the processes 1100A, 1100B, and 1100C may include additional blocks, fewer blocks, different blocks, or differently arranged blocks than those depicted in FIGS. 11A-11C . Additionally, or alternatively, two or more of the blocks of the processes 1100A, 1100B, and 1100C may be arranged or combined in any order, or performed in parallel.

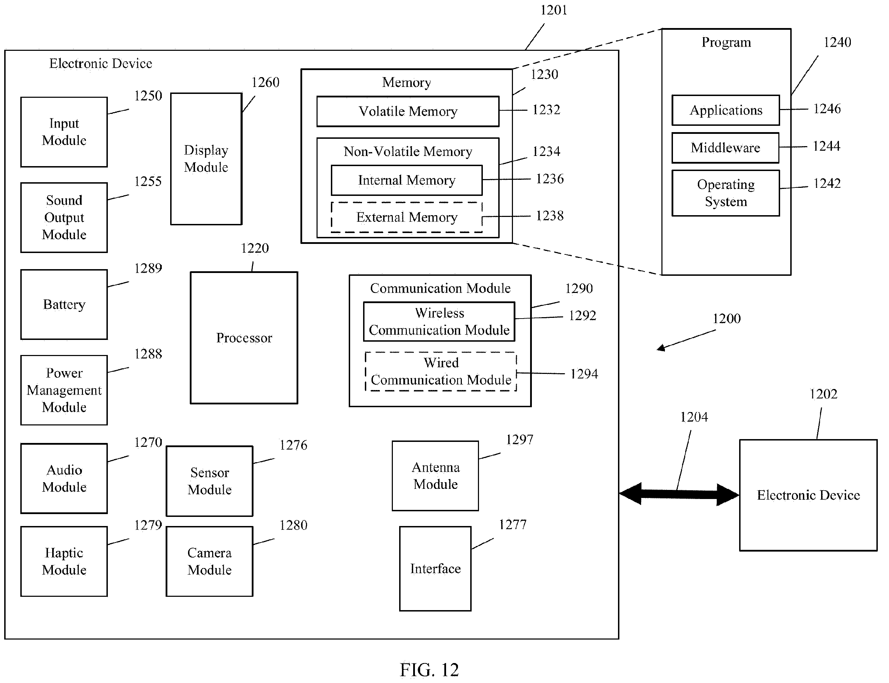

Fig. 12 is a block diagram illustrating an electronic device 1201 in an environment 1200 according to an embodiment. Referring to Fig. 12, the electronic device 1201 in the environment 1200 may communicate with an electronic device 1202 via a communication channel 1204. In embodiments, one or more of the electronic device 1201 and the electronic device 1202 may correspond to one or more of the transmitter 102 and the receiver 104 discussed above, and the communication channel 1204 may correspond to the communication channel 106 discussed above.

According to an embodiment, the electronic device 1201 may include a processor 1220, memory 1230, an input module 1250, a sound output module 1255, a display module 1260, an audio module 1270, a sensor module 1276, an interface 1277, a connecting terminal, a haptic module 1279, a camera module 1280, a power management module 1288, a battery 1289, a communication module 1290, and an antenna module 1297. In some embodiments, at least one of the components may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a central processing unit (CPU) or an application processor (AP), a graphics processing unit (GPU), a neural processing unit (NPU), an image signal processor (ISP), a sensor hub processor, or a communication processor (CP).

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to one embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing the communication channel 1204, which may be a direct (e.g., wired) communication channel or a wireless communication channel, between the electronic device 1201 and am external electronic device (e.g., the electronic device 1202) and performing communication via the communication channel 1204. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device 1202 via the communication channel 1204, which operate according to, for example a short-range communication network, such as BluetoothTM, wireless-fidelity (Wi-Fi) direct, or infrared data association (IrDA), a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1202), or a network system. According to an embodiment, the wireless communication module 1292 may support a peak data rate (e.g., 20Gbps or more) for implementing eMBB, loss coverage (e.g., 1064dB or less) for implementing mMTC, or U-plane latency (e.g., 0.5ms or less for each of downlink (DL) and uplink (UL), or a round trip of 8ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in a communication network may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the electronic device 1202 via a server coupled with the communication channel 1204. The electronic device 1202 may be a device of a same type as, or a different type, from the electronic device 1201. According to an embodiment, all or some of operations to be executed at the electronic device 1201 may be executed at the external electronic device 1202. For example, if the electronic device 1201 should perform a function or a service automatically, or in response to a request from a user or another device, the electronic device 1201, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1202 may include an internet-of-things (IoT) device. The server may be an intelligent server using machine learning and/or a neural network. The electronic device 1201 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance.

According to an embodiment of the disclosure, the electronic devices are not limited to those described above.

As is traditional in the field, the embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

The various operations of methods described above may be performed by any suitable means capable of performing the operations, such as various hardware and/or software component(s), circuits, and/or module(s).

The software may include an ordered listing of executable instructions for implementing logical functions, and can be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

The foregoing is illustrative of the embodiments and is not to be construed as limiting thereof. Although a few embodiments have been described, those skilled in the art will readily appreciate that many modifications are possible in the embodiments without materially departing from the present scope.

**Claims**

**1.** A communication device, comprising:

a receiver configured to receive a signal from a transmitter, the signal comprising a plurality of data symbols; and
at least one processor configured to:

obtain a channel estimate and an estimated carrier frequency offset based on a result of an interference detection indicating whether interference is detected in the plurality of data symbols,
obtain a data symbol of the plurality of data symbols,
obtain a compensated data symbol corresponding to the data symbol based on the estimated carrier frequency offset,
obtain an equalized compensated data symbol by performing channel equalization on the compensated data symbol based on the channel estimate, and
demodulate and decode the equalized compensated data symbol to obtain decoded data.

**2.** The communication device of claim 1, wherein the receiver is further configured to receive a packet comprising a training portion and a payload portion, and
wherein the plurality of data symbols are included in the payload portion.

**3.** The communication device of claim 1 or claim 2, wherein based on determining that a first predetermined number of data symbols from among the plurality of data symbols have been decoded, the at least one processor is further configured to:

obtain an updated carrier frequency offset and an updated channel estimate based on the result of the interference detection,
obtain a new data symbol of the plurality of data symbols,

obtain a new compensated data symbol corresponding to the new data symbol based on the updated carrier frequency offset,

obtain a new equalized compensated data symbol by performing the channel equalization on the new compensated data symbol based on the updated channel estimate, and

demodulate and decode the new equalized compensated data symbol to obtain new decoded data.

4. The communication device of claim 3, wherein the at least one processor is further configured to:

determine an initial channel estimate based on the compensated data symbol and the equalized compensated data symbol, and

calculate at least one of the updated channel estimate and the updated carrier frequency offset based on the initial channel estimate and the result of the interference detection.

5. The communication device of claim 4, wherein based on the result of the interference detection indicating that the interference is detected, the at least one processor is further configured to:

calculate the updated channel estimate based on the channel estimate and the estimated carrier frequency offset,

based on Kalman filtering being enabled, calculate the updated carrier frequency offset based on the initial channel estimate using the Kalman filtering, and

based on the Kalman filtering not being enabled, set the updated carrier frequency offset equal to the estimated carrier frequency offset.

6. The communication device of claim 4, wherein based on the result of the interference detection indicating that the interference is not detected, the at least one processor is further configured to:

calculate the updated channel estimate based on the channel estimate and a phase difference between the channel estimate and the initial channel estimate,

based on Kalman filtering being enabled, calculate the updated carrier frequency offset using the Kalman filtering, and

based on the Kalman filtering not being enabled, calculate the updated carrier frequency offset based on the estimated carrier frequency offset and the phase difference between the channel estimate and the initial channel estimate.

7. The communication device of any one of claims 3-6, wherein based on determining that a second predetermined number of data symbols from among the plurality of data symbols have been decoded, the at least one processor is further configured to:

calculate a signal to interference and noise ratio (SINR) value based on the compensated data symbol and the equalized compensated data symbol,

obtain an updated result of the interference detection based on a comparison between the SINR value and a threshold SINR value.

8. A device for estimating carrier frequency offset, the device comprising:

a memory configured to store a plurality of data symbols; and
at least one processor configured to:

obtain a channel estimate and an estimated carrier frequency offset based on a result of an interference detection indicating whether interference is detected in the plurality of data symbols,

obtain a data symbol of the plurality of data symbols,

obtain an equalized compensated data symbol corresponding to the data symbol based on the estimated carrier frequency offset and the channel estimate, and

demodulate and decode the equalized compensated data symbol to obtain decoded data.

9. The device of claim 8, wherein the plurality of data symbols are included in a payload portion of a packet, and wherein the packet comprises a preamble portion separate from the payload portion.

10. The device of claim 8 or claim 9, wherein based on determining that a first predetermined number of data symbols from among the plurality of data symbols have been decoded, the at least one processor is further configured to:

obtain an updated carrier frequency offset and an updated channel estimate based on the result of the interference detection,
obtain a new data symbol of the plurality of data symbols,
obtain a new equalized compensated data symbol corresponding to the new data symbol based on the updated carrier frequency offset and the updated channel estimate, and
demodulate and decode the new equalized compensated data symbol to obtain new decoded data.

11. The device of claim 10, wherein the at least one processor is further configured to:

determine an initial channel estimate based on the equalized compensated data symbol, and
calculate at least one of the updated channel estimate and the updated carrier frequency offset based on the initial channel estimate and the result of the interference detection.

12. The device of claim 11, wherein based on the result of the interference detection indicating that the interference is detected, the at least one processor is further configured to:

calculate the updated channel estimate based on the channel estimate and the estimated carrier frequency offset,
based on Kalman filtering being enabled, calculate the updated carrier frequency offset based on the initial channel estimate using the Kalman filtering, and
based on the Kalman filtering not being enabled, set the updated carrier frequency offset equal to the estimated carrier frequency offset.

13. The device of claim 11, wherein based on the result of the interference detection indicating that the interference is not detected, the at least one processor is further configured to:

calculate the updated channel estimate based on the channel estimate and a phase difference between the channel estimate and the initial channel estimate,
based on Kalman filtering being enabled, calculate the updated carrier frequency offset using the Kalman filtering, and
based on the Kalman filtering not being enabled, calculate the updated carrier frequency offset based on the estimated carrier frequency offset and the phase difference between the channel estimate and the initial channel estimate.

14. The device of any one of claims 10- 13, wherein based on determining that a second predetermined number of data symbols from among the plurality of data symbols have been decoded, the at least one processor is further configured to:

calculate a signal to interference and noise ratio (SINR) value based on the equalized compensated data symbol, and
obtain an updated result of the interference detection based on a comparison between the SINR value and a threshold SINR value.

15. A communication method for operating a communication device, the communication method being performed by at least one processor and comprising:

receiving, by a receiver from a transmitter, a plurality of data symbols;
obtaining a channel estimate and an estimated carrier frequency offset based on a result of an interference detection indicating whether interference is detected in the plurality of data symbols;
obtaining a data symbol from among the plurality of data symbols;
obtaining a compensated data symbol corresponding to the data symbol based on the estimated carrier frequency offset;
obtaining an equalized compensated data symbol by performing channel equalization on the compensated data symbol based on the channel estimate; and
demodulating and decoding the equalized compensated data symbol to obtain decoded data.

FIG. 1          100

106

Transmitter

Receiver

Estimation
Module

Decoding
Module

108

102

104

110

FIG. 2

| Preamble | Data |
|----------|------|

202   204

EP 4 366 254 A1

FIG. 3

FIG. 4A

EP 4 366 254 A1

FIG. 4B

418

BUFF_RX    BUFF_HD    BUFF_SLCT

$\hat{h}, \hat{\omega}$ ——→ | Initial Channel Estimation | — 421

$\hat{h}_{dd}$

422

*interference_detected* ——→ | Interference-Aware Channel Update |

$\hat{h}, \hat{\omega}$ ——→

423

| Interference-Aware CFO Update | ←—— *interference_detected*

←—— $\widehat{SINR}_{dB}$

Updated $\hat{h}$          Updated $\hat{\omega}$

EP 4 366 254 A1

FIG. 5A

FIG. 5B

EP 4 366 254 A1

FIG. 5D

Interference-aware CFO tracking

SNR=5dB
SNR=7dB
SNR=9dB

FIG. 5C

Without interference-aware CFO tracking

SNR=5dB
SNR=7dB
SNR=9dB

# FIG. 6A

AWGN channel

BLER vs SNR (dB)

Legend:
- Comparative Example 1 ($\mu_{max} = 1$)
- Example 1 ($\mu_f^0 = 0, \mu_c = 1$)
- Example 1 ($\mu_f^0 = 1/16, \mu_c = 1$)

FIG. 6C

FIG. 6B

FIG. 6D

AWGN+Interference channel

BLER

SNR (dB)

⊖— Comparative Example 1 ($\mu_{max} = 1$)
⊖— Example 1 ($\mu_f^0 = 0, \mu_c = 1$)
⊖— Example 1 ($\mu_f^0 = 1/16, \mu_c = 1$)

FIG. 6E

AWGN+Interference channel

Legend (FIG. 6E):
- Comparative Example 1 (SNR = 5dB)
- Comparative Example 1 (SNR = 6dB)
- Comparative Example 1 (SNR = 7dB)
- Comparative Example 1 (SNR = 8dB)
- Comparative Example 1 (SNR = 9dB)
- Comparative Example 1 (SNR = 10dB)
- Example 1 (SNR = 5dB)
- Example 1 (SNR = 6dB)
- Example 1 (SNR = 7dB)
- Example 1 (SNR = 8dB)
- Example 1 (SNR = 9dB)
- Example 1 (SNR = 10dB)

FIG. 6F

AWGN+Interference channel

Legend (FIG. 6F):
- Comparative Example 1 (SNR = 5dB)
- Comparative Example 1 (SNR = 6dB)
- Comparative Example 1 (SNR = 7dB)
- Comparative Example 1 (SNR = 8dB)
- Comparative Example 1 (SNR = 9dB)
- Comparative Example 1 (SNR = 10dB)
- Example 1 (SNR = 5dB)
- Example 1 (SNR = 6dB)
- Example 1 (SNR = 7dB)
- Example 1 (SNR = 8dB)
- Example 1 (SNR = 9dB)
- Example 1 (SNR = 10dB)

FIG. 7A

AWGN channel

BLER vs SNR (dB)

Legend: Comparative Example 2, Example 2

## FIG. 7B

AWGN channel

RMS CFO error (kHz) vs Update Index

Legend:
--■-- Comparative Example 2 (SNR = 5dB)
--□-- Comparative Example 2 (SNR = 6dB)
--▲-- Comparative Example 2 (SNR = 7dB)
--△-- Comparative Example 2 (SNR = 8dB)
--●-- Comparative Example 2 (SNR = 9dB)
--○-- Comparative Example 2 (SNR = 10dB)
——— Example 2 (SNR = 5dB)
--------- Example 2 (SNR = 6dB)
—·—·— Example 2 (SNR = 7dB)
——— Example 2 (SNR = 8dB)
——— Example 2 (SNR = 9dB)
——— Example 2 (SNR = 10dB)

## FIG. 7C

AWGN channel

RMS phase error (Rad) vs Update Index

Legend:
--■-- Comparative Example 2 (SNR = 5dB)
--□-- Comparative Example 2 (SNR = 6dB)
--▲-- Comparative Example 2 (SNR = 7dB)
--△-- Comparative Example 2 (SNR = 8dB)
--●-- Comparative Example 2 (SNR = 9dB)
--○-- Comparative Example 2 (SNR = 10dB)
——— Example 2 (SNR = 5dB)
--------- Example 2 (SNR = 6dB)
—·—·— Example 2 (SNR = 7dB)
——— Example 2 (SNR = 8dB)
——— Example 2 (SNR = 9dB)
——— Example 2 (SNR = 10dB)

EP 4 366 254 A1

# FIG. 7D

AWGN+Interference channel

Legend:
- Comparative Example 2
- Example 2

# FIG. 7E

**AWGN+Interference channel**

RMS CFO error (kHz) vs Update Index

---- ■ ---- Comparative Example 2 (SNR = 5dB)
---- □ ---- Comparative Example 2 (SNR = 6dB)
---- ▲ ---- Comparative Example 2 (SNR = 7dB)
---- △ ---- Comparative Example 2 (SNR = 8dB)
---- ● ---- Comparative Example 2 (SNR = 9dB)
---- ○ ---- Comparative Example 2 (SNR = 10dB)
———— Example 2 (SNR = 5dB)
———— Example 2 (SNR = 6dB)
———— Example 2 (SNR = 7dB)
———— Example 2 (SNR = 8dB)
———— Example 2 (SNR = 9dB)
———— Example 2 (SNR = 10dB)

# FIG. 7F

**AWGN+Interference channel**

RMS phase error (Rad) vs Update Index

---- ■ ---- Comparative Example 2 (SNR = 5dB)
---- □ ---- Comparative Example 2 (SNR = 6dB)
---- ▲ ---- Comparative Example 2 (SNR = 7dB)
---- △ ---- Comparative Example 2 (SNR = 8dB)
---- ● ---- Comparative Example 2 (SNR = 9dB)
---- ○ ---- Comparative Example 2 (SNR = 10dB)
———— Example 2 (SNR = 5dB)
———— Example 2 (SNR = 6dB)
———— Example 2 (SNR = 7dB)
———— Example 2 (SNR = 8dB)
———— Example 2 (SNR = 9dB)
———— Example 2 (SNR = 10dB)

EP 4 366 254 A1

FIG. 8A

FIG. 8B

AWGN channel

BLER

Example1
Example2

SNR (dB)

AWGN+Interference channel

BLER

Example1
Example2

SNR (dB)

EP 4 366 254 A1

FIG. 8C

FIG. 8D

FIG. 8E

FIG. 8F

## FIG. 9A

Interference tracking in AWGN channel

SNR = 3dB
SNR = 5dB
SNR = 7dB
SNR = 9dB

## FIG. 9B

Interference tracking in AWGN + Interference channel

SNR = 5dB
SNR = 6dB
SNR = 7dB
SNR = 8dB
SNR = 9dB
SNR = 10dB

FIG. 10

AWGN + Interference channel

RMS CFO error (kHz) vs Update Index

Legend:
- Interference-awareness without cool down (SNR = 5dB)
- Interference-awareness without cool down (SNR = 6dB)
- Interference-awareness without cool down (SNR = 7dB)
- Interference-awareness without cool down (SNR = 8dB)
- Interference-awareness without cool down (SNR = 9dB)
- Interference-awareness without cool down (SNR = 10dB)
- Interference-awareness with cool down (SNR = 5dB)
- Interference-awareness with cool down (SNR = 6dB)
- Interference-awareness with cool down (SNR = 7dB)
- Interference-awareness with cool down (SNR = 8dB)
- Interference-awareness with cool down (SNR = 9dB)
- Interference-awareness with cool down (SNR = 10dB)

40

FIG. 11A

1100A

Receiving a plurality of data symbols — 1111

Obtaining a channel estimate and an estimated carrier frequency offset based on a result of an interference detection indicating whether interference is detected in the plurality of data symbols — 1112

Obtaining a data symbol of the plurality of data symbols — 1113

Obtaining a compensated data symbol corresponding to the data symbol based on the estimated carrier frequency offset — 1114

Obtaining an equalized compensated data symbol by performing channel equalization on the compensated data symbol based on the channel estimate — 1115

Demodulating and decoding the equalized compensated data symbol to obtain decoded data — 1116

EP 4 366 254 A1

FIG. 11B

1100B

| 1121 | Based on determining that a first predetermined number of data symbols from among the plurality of data symbols have been decoded, obtaining a channel estimate and an estimated carrier frequency offset based on a result of an interference detection indicating whether interference is detected in the plurality of data symbols |

| 1122 | Obtaining a new data symbol of the plurality of data symbols |

| 1123 | Obtaining a new compensated data symbol corresponding to the data symbol based on the updated estimated carrier frequency offset |

| 1124 | Obtaining a new equalized compensated data symbol by performing channel equalization on the new compensated data symbol based on the updated channel estimate |

| 1125 | Demodulating and decoding the new equalized compensated data symbol to obtain decoded data |

FIG. 11C

1100C

Based on determining that a second
predetermined number of data symbols from
among the plurality of data symbols have been
decoded, calculating a SINR value based on the
compensated data symbol and the equalized
compensated data symbol

1131

Obtaining an updated result of the interference
detection based on a comparison between the
SINR value and a threshold SINR value

1132

FIG. 12

Europäisches
Patentamt

European
Patent Office

Office européen
des brevets

# EUROPEAN SEARCH REPORT

**Application Number**

EP 23 20 8192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 111 770 B1 (MOON JAEKYUN [US] ET AL) 7 February 2012 (2012-02-07) | 1-4, 7-11,14, 15 | INV. H04L25/02 H04L25/03 |
| A | * column 7 - column 16; figure 9 * | 5,6,12, 13 | ADD. H04L27/26 |
| X | TIMO ROMAN ET AL: "Joint Time-Domain Tracking of Channel and Frequency Offsets for MIMO OFDM Systems", WIRELESS PERSONAL COMMUNICATIONS, KLUWER ACADEMIC PUBLISHERS, DO, vol. 31, no. 3-4, 1 December 2004 (2004-12-01), pages 181-200, XP019271864, ISSN: 1572-834X | 1-4, 7-11,14, 15 | |
| A | * sections 1-3 * | 5,6,12, 13 | |
| A | MOHAMMADIAN AMIRHOSSEIN ET AL: "RF Impairments in Wireless Transceivers: Phase Noise, CFO, and IQ Imbalance - A Survey", IEEE ACCESS, IEEE, USA, vol. 9, 2 August 2021 (2021-08-02), pages 111718-111791, XP011871938, DOI: 10.1109/ACCESS.2021.3101845 [retrieved on 2021-08-12] * section III * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 1 March 2024 | El Hajj Shehadeh, Y |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 8192

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2024

| Patent document cited in search report | Publication date | Patent family member(s) | Publication date |
|---|---|---|---|
| US 8111770 B1 | 07-02-2012 | US 7649952 B1<br>US 8111770 B1 | 19-01-2010<br>07-02-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1389861 A1

**Non-patent literature cited in the description**

- **J. RAN ; R. GRÜNHEID ; H. ROHLING ; EDGAR BOLINTH ; RALF KERN.** Decision-directed Channel Estimation Method for OFDM systems with high velocities. *IEEE 58th Vehicular Technology Conference (VTC),* 2003

- **A. PATAPOUTIAN.** On Phase-Locked Loops and Kalman Filters. *IEEE Trans. Commun.,* May 1999, vol. 47 (5), 670-672